# EUROPEAN PATENT SPECIFICATION

(11) **EP 4 072 101 B1**
(45) Date of publication and mention of the grant of the patent: **07.01.2026**
(21) Application number: 21167050.0
(22) Date of filing: 06.04.2021
(51) Int. Cl.: H04L 67/51, H04L 61/4511, H04L 61/2514

(54) **ENHANCED EDGE APPLICATION SERVER DISCOVERY PROCEDURE**
VERFAHREN ZUR ENTDECKUNG EINES VERBESSERTEN SERVERS FÜR EDGE-ANWENDUNGEN
PROCÉDURE DE DÉCOUVERTE DE SERVEUR D'APPLICATIONS DE BORDURE AMÉLIORÉE

(43) Date of publication of application: 12.10.2022
(73) Proprietor: Nokia Technologies Oy, 02610 Espoo (FI)
(72) Inventor: THIEBAUT, Laurent, 92160 Antony (FR); LANDAIS, Bruno, 22560 Pleumeur-Bodou (FR); SINGH, Shubhranshu, 64342 Seeheim-Jugenheim (DE); HOFFMANN, Klaus, 80995 München (DE)
(74) Representative: TBK

(56) References cited:
- WO-A1-2021/032118
- WO-A2-2021/016631
- US-A1- 2020 068 653
- US-A1- 2020 228 608

## Description

### Field

Various example embodiments relate to an enhanced edge application server discovery procedure. More specifically, various example embodiments exemplarily relate to measures (including methods, apparatuses and computer program products) for realizing an enhanced edge application server discovery procedure.

### Background

The present specification generally relates to edge application server discovery.

Edge application servers (EAS) discovery procedure with a newly introduced network function (NF) called edge application server discovery function (EASDF) is being defined in Third Generation Partnership Project (3GPP) TS 23.548 ("5G System Enhancements for Edge Computing") as a follow up of TR work in 3GPP SA2 TR 23.748.

The deployment discussed herein corresponds to a 5^{th} Generation core (network) (5GC) using private IP(v4) addresses (as internet protocol (IP) address allocated to the user equipment (UE) and as IP addressing used on the N6 interface of a user plane function (UPF)) used to access EASs that are on the public internet. There is therefore network address translation (NAT) between the 5GC and the EAS(s).

The 5GC may use private IP addressing due to multiple reasons, for example, due to scarcity of IPv4 addresses for operators who have huge number of users and services but a limited amount of Public IP addresses.

The EAS may be deployed in the private IP domain sometimes (for some operator deployed applications) and sometimes in the public IP domain (especially for edge applications whose deployment is run by third parties).

Hence, the problem arises that challenges caused by NAT between the 5GC and the EAS(s) are to be addressed.

Hence, there is a need to provide for an enhanced edge application server discovery procedure.

*Further prior art can be found in document* WO 2021/032118 A1*, disclosing a domain name system (DNS) query method and a communication device. The method comprises that a first network element receives a DNS query request from a terminal device, the DNS query request comprising a first domain name and being used for requesting an IP address corresponding to the first domain name, that the first network element sends first request information to a second network element, the first request information comprising position information of the terminal device and the first domain name, that the second network element determines an IP address corresponding to the first domain name and the position of the terminal device according to the first request information and feeds back same to the first network element, and that the first network element sends the IP address to the terminal device. When the terminal device carries out the domain name query, a network element of a core network determines an IP address of the corresponding application server by combining the position information of the terminal device and the queried domain name, so that the terminal device obtains an IP address of an application server closest to it and accesses the service nearby.*

*Further prior art can be found in document* US 2020/228608 A1*, disclosing discovery of a user plane function that supports cellular Internet-of- Things (IoT) optimization. According to this document, a network exposure function receives, from an application function, a first message requesting delivery of one or more IoT packets to a wireless device. The network exposure function sends, to a network repository function, a second message requesting a discovery of a user plane function that supports cellular IoT optimization. The network exposure function receives, from the network repository function, a third message comprising an identifier of the user plane function that supports the cellular IoT optimization. The network exposure function sends, to the user plane function, a fourth message requesting delivery of the one or more IoT packets to the wireless device.*

*Further prior art can be found in document* US 2020/068653 A1*, disclosing a message and a system for application function influence on traffic routing. Further prior art can be found in document* WO 2021/016631 A2*, disclosing methods and an apparatus for mobility management.*

### Summary

Various example embodiments aim at addressing at least part of the above issues and/or problems and drawbacks.

*The above mentioned objects are achieved by various aspects of example embodiments defined in the appended independent claims. Advantageous modifications thereof are set forth in the appended dependent claims.*

Any one of the above aspects enables an efficient edge application server discovery procedure even in case of NAT being applied between the 5GC and the EAS(s) to thereby solve at least part of the problems and drawbacks identified in relation to the prior art.

By way of example embodiments, there is provided an enhanced edge application server discovery procedure. More specifically, by way of example embodiments, there are provided measures and mechanisms for realizing an enhanced edge application server discovery procedure.

Thus, improvement is achieved by methods, apparatuses and computer program products enabling/realizing an enhanced edge application server discovery procedure and in particular by methods, apparatuses and computer program products enabling/realizing an enhanced edge application server discovery procedure with an edge application server discovery function.

### Brief description of the drawings

In the following, the present disclosure will be described in greater detail by way of non-limiting examples with reference to the accompanying drawings, in which
Figure 1 is a block diagram illustrating an apparatus according to example embodiments,
Figure 2 is a block diagram illustrating an apparatus according to example embodiments,
Figure 3 is a block diagram illustrating an apparatus according to example embodiments,
Figure 4 is a block diagram illustrating an apparatus according to example embodiments,
Figure 5 is a block diagram illustrating an apparatus according to example embodiments,
Figure 6 is a block diagram illustrating an apparatus according to example embodiments,
Figure 7 is a block diagram illustrating an apparatus according to example embodiments,
Figure 8 is a schematic diagram of a procedure according to example embodiments,
Figure 9 is a schematic diagram of a procedure according to example embodiments,
Figure 10 is a schematic diagram of a procedure according to example embodiments,
Figure 11 is a schematic diagram of a procedure according to example embodiments,
Figure 12 shows a schematic diagram of signaling sequences in relation to an edge application servers discovery procedure,
Figure 13 shows a schematic diagram of signaling sequences in relation to an edge application servers discovery procedure,
Figure 14 shows a schematic diagram of signaling sequences in relation to application function traffic routing influence request processing,
Figure 15 shows a schematic diagram of signaling sequences in relation to application function traffic routing influence request processing according to example embodiments,
Figure 16 shows a schematic diagram of signaling sequences in relation to an edge application servers discovery procedure according to example embodiments, and
Figure 17 is a block diagram alternatively illustrating apparatuses according to example embodiments.

### Detailed description

The present disclosure is described herein with reference to particular non-limiting examples and to what are presently considered to be conceivable embodiments. A person skilled in the art will appreciate that the disclosure is by no means limited to these examples, and may be more broadly applied.

It is to be noted that the following description of the present disclosure and its embodiments mainly refers to specifications being used as non-limiting examples for certain exemplary network configurations and deployments. Namely, the present disclosure and its embodiments are mainly described in relation to 3GPP specifications being used as non-limiting examples for certain exemplary network configurations and deployments. As such, the description of example embodiments given herein specifically refers to terminology which is directly related thereto. Such terminology is only used in the context of the presented non-limiting examples, and does naturally not limit the disclosure in any way. Rather, any other communication or communication related system deployment, etc. may also be utilized as long as compliant with the features described herein.

Hereinafter, various embodiments and implementations of the present disclosure and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

According to example embodiments, in general terms, there are provided measures and mechanisms for (enabling/realizing) an enhanced edge application server discovery procedure.

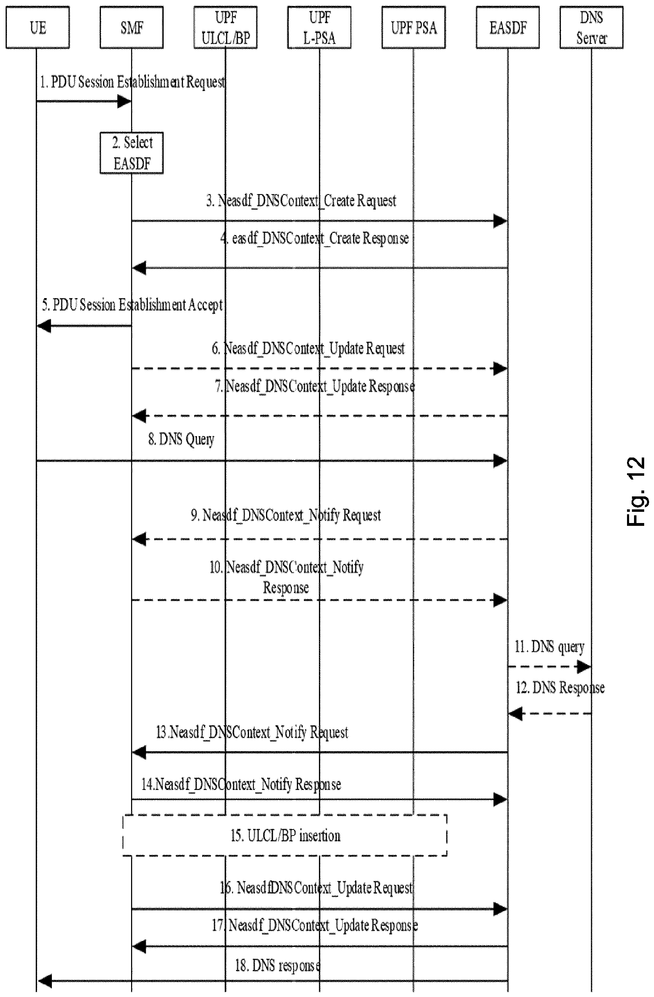

Figure 12 shows a schematic diagram of signaling sequences in relation to an edge application servers discovery procedure, and in particular illustrates an EAS discovery procedure using EASDF (as e.g. defined in 3GPP TS 23.548). For the sake of clarity, Figure 12 describes several network entities by describing the interaction between them. However, it should be clear that each network entity and its function can be deployed and implemented independently from the other entities described in connection with Figure 12.

In a step 1 of the EAS discovery procedure shown in Figure 12, the UE sends a PDU session establishment request to the SMF as shown in step 1 of clause 4.3.2.2.1 of 3GPP TS 23.502.

In a step 2 of the EAS discovery procedure shown in Figure 12, the SMF selects an EASDF as described in clause 6.3.x 3GPP of TS 23.501. This selection may use NRF discovery or may be based on SMF local configuration. The EASDF may have registered onto the NRF.

The EASDF may register itself to the NRF.

In a step 3 of the EAS discovery procedure shown in Figure 12, the SMF invokes a Neasdf_DNSContext_Create request (UE IP address, callback URI , rules to handle Domain Name System (DNS) messages from the UE) to the selected EASDF. The rules to handle DNS messages from the UE (i.e. DNS message handling rule) may include DNS message forwarding rule and/or DNS message reporting rule. The DNS message forwarding rule includes DNS server address to be forwarded and/or information for the ECS option to be added.

This step is performed before step 11 of PDU session establishment procedure in clause 4.3.2.2.1 of 3GPP TS 23.502.

The EASDF creates a DNS context for the PDU session, and stores the UE IP address, the callback URI and rules to handle DNS messages from the UE into the context.

The DNS message reporting rule includes the reporting condition for the EASDF to report the DNS information including EAS related information to SMF when it receives DNS queries or DNS responses.

For the EASDF to process a DNS query and be able to add a DNS ECS options or to send the request to a local DNS server, the SMF may provide the reporting rule to instruct the EASDF to send the EAS FQDN(s) to the SMF, if the EAS FQDN in the DNS query message matches with the FQDN(s) filters in the DNS message reporting rule.

For the EASDF to process a DNS response for a specific IP address or FQDN ranges, the SMF provides the reporting rule to instruct the EASDF to report EAS IP address/FQDN to the SMF, if the EAS IP address in the DNS responses message matches one of the IP address range(s) of the reporting rule, or the FQDN in the DNS Response matches one of the FQDNs in the DNS message reporting rule.

The EASDF is provisioned with the forwarding rule(s), i.e. information for ECS option(s) or local DNS server(s) for the FQDN(s) and DNAI(s), before the DNS query message is received at the EASDF or as a consequence of the DNS query reporting.

In a step 4 of the EAS discovery procedure shown in Figure 12, the EASDF invokes the service operation Neasdf_DNSContext_Create response (IP address of the EASDF) and with information allowing later the SMF to update or delete the context.

The IP address of the EASDF is the address which is to be used by the UE to reach the EASDF as a DNS server for the PDU session.

In a step 5 of the EAS discovery procedure shown in Figure 12, the SMF includes the IP address of the EASDF as DNS server in a PDU session establishment accept message as in step 11 of clause 4.3.2.2.1 of 3GPP TS 23.502. The UE configures the EASDF as DNS server for that PDU Session.

It may be ensured that the UE uses the EASDF's IP address for the subsequent DSN query in step 8.

In a step 6 of the EAS discovery procedure shown in Figure 12, the SMF may invoke a Neasdf_DNSContext_Update request (PDU session context ID, rules to handle DNS queries from the UE) to the EASDF. The update may be triggered by UE mobility, e.g. when UE moves to a new location, or by a reporting by EASDF of a DNS query with a certain FQDN, or the update may be triggered by insertion/removal of a Local PSA, e.g. to update rules to handle DNS messages from the UE or by new PCC rule information.

The AF-triggered DNS server information change may trigger a DNS context update procedure.

In a step 7 of the EAS discovery procedure shown in Figure 12, the EASDF responds with a Neasdf_DNSContext_Update response.

In a step 8 of the EAS discovery procedure shown in Figure 12, the UE sends a DNS query message to the EASDF.

In a step 9 of the EAS discovery procedure shown in Figure 12, if the DNS query message matches the DNS message reporting condition for the UE, the EASDF sends the DNS message report to the SMF by invoking a Neasdf_DNSContext_Notify request.

In a step 10 of the EAS discovery procedure shown in Figure 12, the SMF responds with a Neasdf_DNSContext_Notify response.

For an Option A, the SMF may include information allowing EASDF to send a corresponding DNS ECS option in the forwarded DNS query message. For an Option B, the SMF may include a corresponding local DNS server IP address in the response message. The EASDF may as well be instructed to simply forward the DNS query to a pre-configured DNS server/resolver.

In a step 11 of the EAS discovery procedure shown in Figure 12, the EASDF handles the DNS query message received from the UE as follows:
- For Option A, the EASDF adds the ECS option into the DNS query message as specified in RFC 7871 and sends it to a C-DNS server,
- For Option B, the EASDF sends the DNS query message to the Local DNS server,
If neither a reporting nor a forwarding rule provided by the SMF matches the requested FQDN in the DNS query, the EASDF may simply forward the DNS query to a pre-configured DNS server/resolver.

In a step 12 of the EAS discovery procedure shown in Figure 12, the EASDF receives DNS responses from the DNS system and determines that a DNS response can be sent to the UE.

In a step 13 of the EAS discovery procedure shown in Figure 12, the EASDF may send a DNS message reporting information to SMF by invoking a Neasdf_DNSContext_Notify request including EAS information, if the EAS IP address or the FQDN in the DNS response message matches the reporting condition provided by the SMF.

The EASDF does not send the DNS Response message to the UE but waits for SMF instructions (in step 14 or step 16).

In a step 14 of the EAS discovery procedure shown in Figure 12, the SMF invokes a Neasdf_DNSContext_Notify response service operation.

A DNS message handling rule might be transferred in a notify response message. Otherwise, the SMF invokes an additional NF service similar to the step 6.

The SMF might send the DNS message handling rule to the EASDF to instruct the EASDF whether to buffer the DNS Response.

In a step 15 of the EAS discovery procedure shown in Figure 12, the SMF may perform an UL CL/BP and Local PSA selection and insert an UL CL/BP and Local PSA.

Based on received EAS information received from the EASDF and other UPF selection criteria, as specified in clause 6.3.3 in 3GPP TS 23.501, the SMF may perform UL CL/BP and Local PSA selection and insertion as described in 3GPP TS 23.502.

In a step 16 of the EAS discovery procedure shown in Figure 12, the SMF invokes a Neasdf_DNSContext_Update request (forward DNS response indication).

The forward DNS response indication is used to indicate the EASDF to forward the cached DNS response received in Step 12 to the UE.

In a step 17 of the EAS discovery procedure shown in Figure 12, the EASDF responds with a Neasdf_DNSContext_Update response.

In a step 18 of the EAS discovery procedure shown in Figure 12, the EASDF sends the DNS response to the UE.

The current version of TS 23.548 does not consider the NAT case between the 5GC (EASDF/local packet data unit (PDU) session anchor (L-PSA) UPF) and the application environment (authoritative resolver for EAS discovery/EAS).

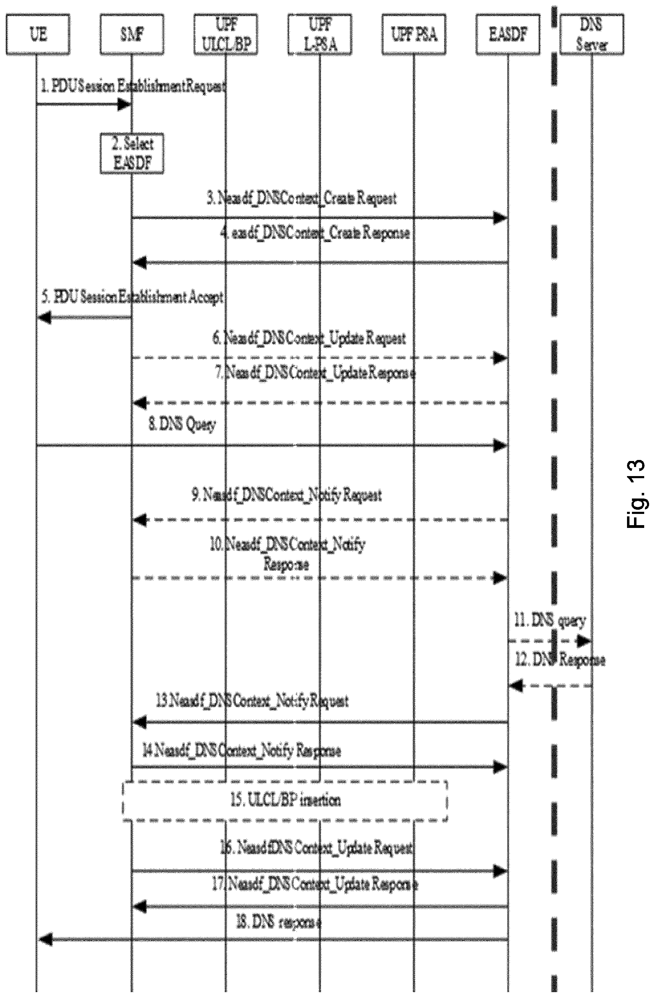

Figure 13 shows a schematic diagram of signaling sequences in relation to an edge application servers discovery procedure, and in particular illustrates an EAS discovery procedure using EASDF. More particularly, Figure 13 shows a modification of the EAS discovery procedure using EASDF illustrated in Figure 12. As for Figure 12, also Figure 13 describes several network entities by describing the interaction between them. However, it should be clear that each network entity and its function can be deployed and implemented independently from the other entities described in connection with Figure 13.

In detail, according to the modified EAS discovery procedure shown in Figure 12, in order to consider the NAT case between the 5GC (EASDF/local packet data unit (PDU) session anchor (L-PSA) UPF) and the application environment (authoritative resolver for EAS discovery/EAS) for EAS discovery, the EASDF may add DNS EDNS client subnet (ECS) option as defined in RFC 7871 to the DNS query in order to guide the DNS translation done by the edge environment authoritative DNS server. This DNS translation is from the fully qualified domain name (FQDN) provided by the UE towards the most suitable EAS IP address.

Thus, example embodiments address the issue how DNS can still select the best EAS i.e. in deployment scenarios where external or internal local NAT applies between the local UPF(s) of the 5GC and the EAS. The NAT may be internal to 5GC (co-located with local PDU session anchor (PSA)) or external to 5GC (not co-located with local PSA).

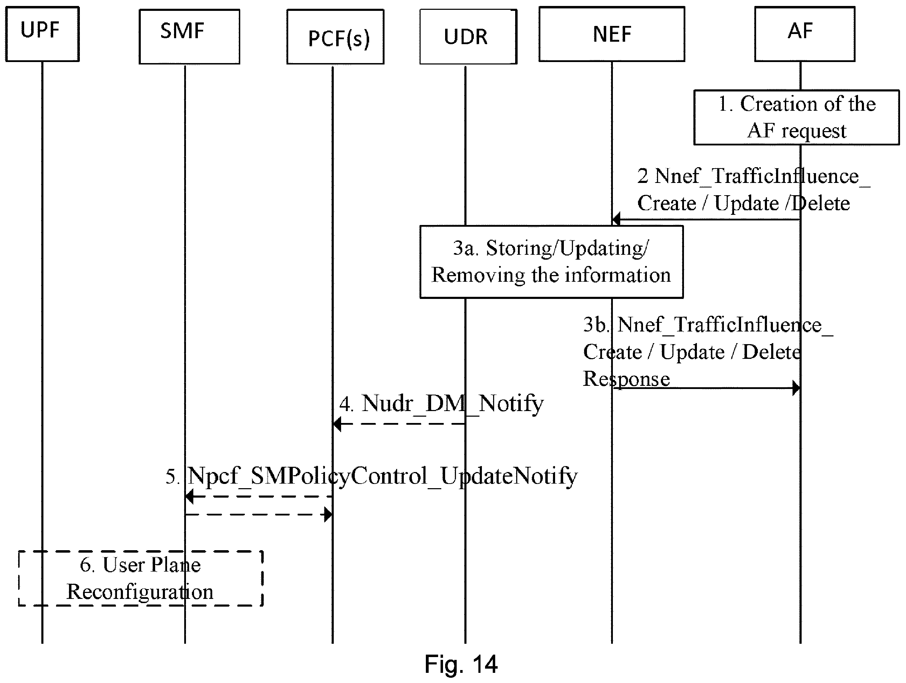

Figure 14 shows a schematic diagram of signaling sequences in relation to application function traffic routing influence request processing, and in particular illustrates processing of AF requests to influence traffic routing for sessions not identified by an UE address (as e.g. defined in 3GPP TS 23.502). While the entities involved in the signaling sequence of Figure 14 are described by referring to the interaction between them, each network entity and its function can be deployed and implemented independently from the other entities described in connection to the signaling sequence of Figure 14.

In a step 1 of the processing shown in Figure 14, the AF creates an AF request.

In a step 2 of the processing shown in Figure 14, the AF transmits a Nnef_TraffincInfluence_Create/Update/Delete request towards an NEF.

In a step 3a of the processing shown in Figure 14, the NEF and an UDR stores/updates/removes the information.

In a step 3b of the processing shown in Figure 14, the NEF transmits a Nnef_TraffincInfluence_Create/Update/Delete response towards the AF.

In a step 4 of the processing shown in Figure 14, the UDR transmits a Nudr_DM_Notify message towards (a) PCF(s).

In a step 5 of the processing shown in Figure 14, the PCF(s) exchange Npcf_SMPolicyControl_UpdateNotify messages with an SMF.

In a step 6 of the processing shown in Figure 14, the SMF performs a user plane reconfiguration with an UPF.

According to 3GPP TS 23.548, the SMF may provide the information to build an ECS option for a DNS query to the EASDF using the N6 interface address of the candidate UPF as defined in 3GPP TS 29.510 Table 6.1.6.2.24-1, as illustrated below.

| Attribute name | Data type | P | Cardinality | Description |
|---|---|---|---|---|
| interfaceType | UPInterfaceType | M | 1 | User Plane interface type |
| ipv4EndpointAddresses | array(Ipv4Addr) | C | 1..N | Available endpoint IPv4 address(es) of the User Plane interface (NOTE 1) (NOTE 2) |
| ipv6EndpointAddresses | array(Ipv6Addr) | C | 1..N | Available endpoint IPv6 address(es) of the User Plane interface (NOTE 1) (NOTE 2) |
| endpointFqdn | Fqdn | C | 0..1 | FQDN of available endpoint of the User Plane interface (NOTE 1) (NOTE 2) |
| networkInstance | string | O | 0..1 | Network Instance (See 3GPP 29.244 [21]) associated to the User Plane interface |

However, based thereon, the SMF does not provide and also cannot get hands on the correct content for the ECS option in the NAT case.

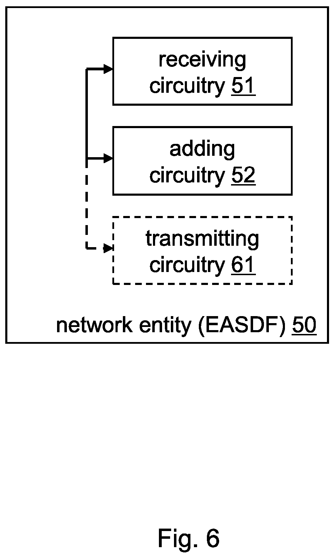

In view thereof, according to example embodiments, at a high level, it is ensured that in the procedure for "EAS discovery with EASDF" described in 3GPP TS 23.548, Figure 6.2.3.2.2-1, it is possible for the EASDF to send DNS requests with an ECS value corresponding to a private N6 IP address of the candidate local PSA and with an ECS value corresponding to a public (NATted) N6 IP address of the candidate local PSA UPF.

To do so, according to example embodiments, the SMF is configured to be able to retrieve both a private N6 IP address and a public (NATted) N6 IP address of the candidate local PSA UPF. According to further example embodiments, the SMF retrieves from the NRF both a private N6 IP address and a public (NATted) N6 IP address of the candidate local PSA UPF.

To do so, according to example embodiments, the local PSA UPF determines a public (NATted) N6 IP address corresponding to its private N6 IP address(es).

In more detail, according to example embodiments, UPFs may be instructed by OAM and/or SMF and determine due to local NAT presence to report a NATted IP address corresponding to their N6 interface to the NRF.

In case of an external NAT, the UPFs may be configured with addressing information of STUN servers to start STUN procedure and to detect NAT. Simple traversal of UDP through NAT (STUN) provides a toolkit of functions. These functions allow entities behind a NAT to learn the address bindings allocated by the NAT, to keep those bindings open, and to communicate with other STUN-aware devices to validate connectivity.

If NAT has been detected, the UPF shall additionally report the NATted IP address corresponding to their N6 interface to the NRF by adding the NATted IP address to the UpfInfoItem as a second Ipv4EndpointAddresses information associated with NATted N6 addresses.

This information is determined by the UPF and provided to the NRF on a per DNN basis.

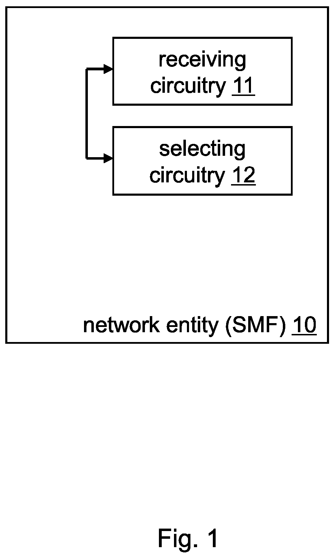

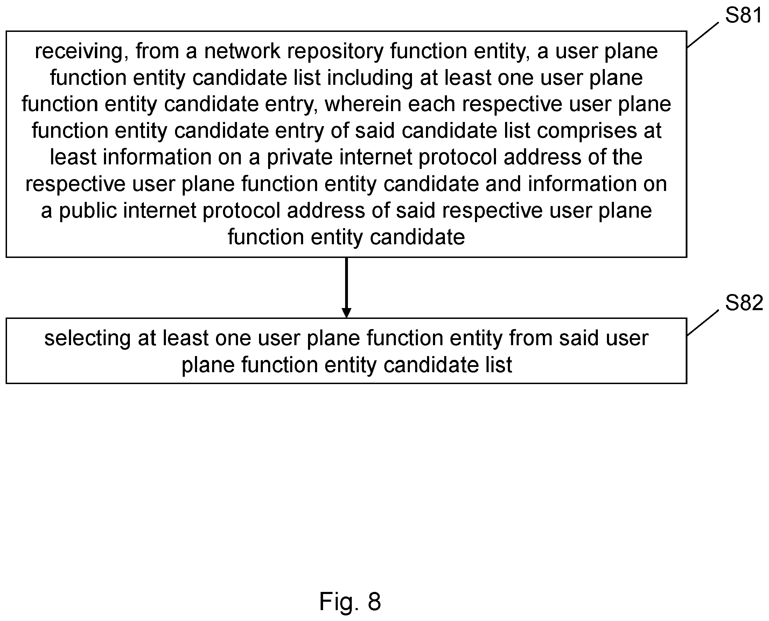

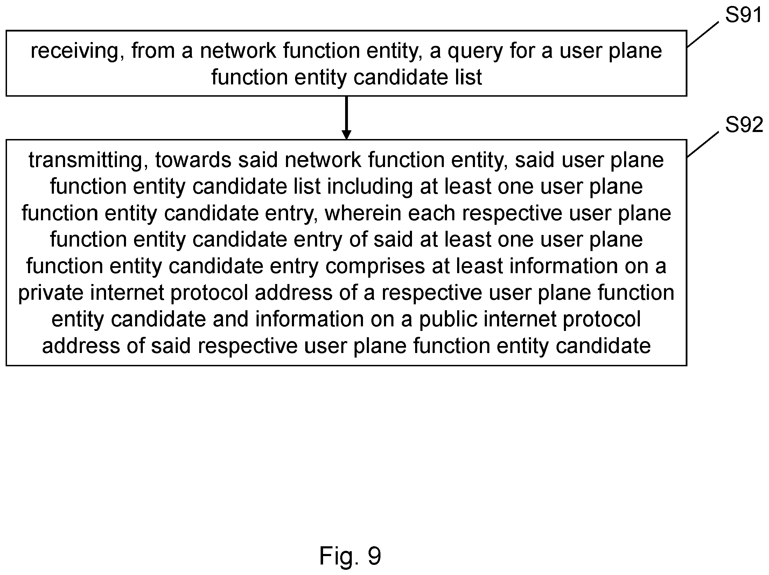

Figure 1 is a block diagram illustrating an apparatus according to example embodiments. The apparatus may be a network node or entity 10 such as a session management function entity comprising a receiving circuitry 11 and a selecting circuitry 12. The apparatus 10 may be configured to perform the functions of one or more entities described in Figures 9 to 13. The receiving circuitry 11 receives, from a network repository function entity, a user plane function entity candidate list including at least one user plane function entity candidate entry, wherein each respective user plane function entity candidate entry of said candidate list comprises at least information on a private internet protocol address of the respective user plane function entity candidate and information on a public internet protocol address of said respective user plane function entity candidate. The selecting circuitry 12 selects at least one user plane function entity from said user plane function entity candidate list. Figure 8 is a schematic diagram of a procedure according to example embodiments. The apparatus according to Figure 1 may perform the method of Figure 8 but is not limited to this method. The method of Figure 8 may be performed by the apparatus of Figure 1 but is not limited to being performed by this apparatus.

As shown in Figure 8, a procedure according to example embodiments comprises an operation of receiving (S81), from a network repository function entity, a user plane function entity candidate list including at least one user plane function entity candidate entry, wherein each respective user plane function entity candidate entry of said candidate list comprises at least information on a private internet protocol address of the respective user plane function entity candidate and information on a public internet protocol address of said respective user plane function entity candidate, and an operation of selecting (S82) at least one user plane function entity from said user plane function entity candidate list.

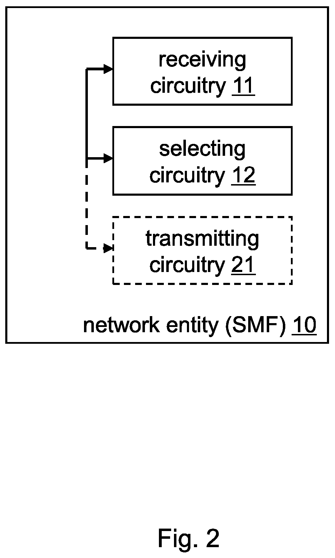

Figure 2 is a block diagram illustrating an apparatus according to example embodiments. In particular, Figure 2 illustrates a variation of the apparatus shown in Figure 1. The apparatus according to Figure 2 may thus further comprise a transmitting circuitry 21.

In an embodiment at least some of the functionalities of the apparatus shown in Figure 1 (or 2) may be shared between two physically separate devices forming one operational entity. Therefore, the apparatus may be seen to depict the operational entity comprising one or more physically separate devices for executing at least some of the described processes.

According to a variation of the procedure shown in Figure 8, exemplary additional operations are given, which are inherently independent from each other as such. According to such variation, an exemplary method according to example embodiments may comprise an operation of transmitting, towards a server discovery function entity, information on said user plane function entity. Here, said information on said user plane function entity includes at least said private internet protocol address of said user plane function entity and said public internet protocol address of said user plane function entity.

According to a variation of the procedure shown in Figure 8, exemplary additional operations are given, which are inherently independent from each other as such. According to such variation, an exemplary method according to example embodiments may comprise an operation of transmitting, towards said network repository function entity, a query for said user plane function entity candidate list.

According to further example embodiments, each respective user plane function entity candidate entry of said at least one user plane function entity candidate entry comprises at least a delay value indicative of a delay between said respective user plane function entity and a configured server entity.

According to further example embodiments, said server entity is a network address translation server entity.

According to further example embodiments, said selecting is based on said respective delay.

According to a variation of the procedure shown in Figure 8, exemplary additional operations are given, which are inherently independent from each other as such. According to such variation, an exemplary method according to example embodiments may comprise an operation of transmitting, towards at least one user plane function entity, an instruction for said at least user plane function entity to inquire own network address translation related information and to report said information of a private internet protocol address of said at least user plane function entity and said information of a public internet protocol address of said at least user plane function entity to a network repository function entity.

According to further example embodiments, said private internet protocol address is a private internet protocol address of said user plane function over a Data Network, and said public internet protocol address is a public internet protocol address of said user plane function over a Data Network derived from the private N6 internet protocol address by network address translation.

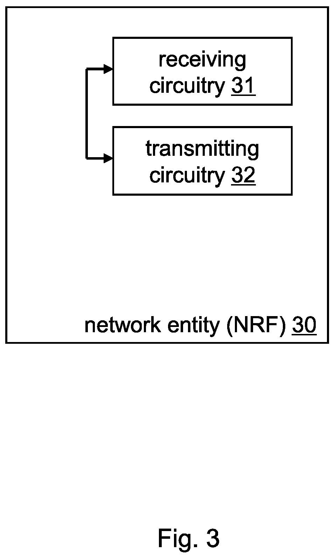

Figure 3 is a block diagram illustrating an apparatus according to example embodiments. The apparatus may be a network node or entity 30 such as a network repository function entity comprising a receiving circuitry 31 and a transmitting circuitry 32. The apparatus 30 may be configured to perform the functions of one or more entities described in Figures 9 to 13. The receiving circuitry 31 receives, from a network function entity, a query for a user plane function entity candidate list. The transmitting circuitry 32 transmits, towards said network function entity, said user plane function entity candidate list including at least one user plane function entity candidate entry, wherein each respective user plane function entity candidate entry of said at least one user plane function entity candidate entry comprises at least information on a private internet protocol address of a respective user plane function entity candidate and information on a public internet protocol address of said respective user plane function entity candidate. Figure 9 is a schematic diagram of a procedure according to example embodiments. The apparatus according to Figure 3 may perform the method of Figure 9 but is not limited to this method. The method of Figure 9 may be performed by the apparatus of Figure 3 but is not limited to being performed by this apparatus.

As shown in Figure 9, a procedure according to example embodiments comprises an operation of receiving (S91), from a network function entity, a query for a user plane function entity candidate list, and an operation of transmitting (S92), towards said network function entity, said user plane function entity candidate list including at least one user plane function entity candidate entry, wherein each respective user plane function entity candidate entry of said at least one user plane function entity candidate entry comprises at least information on a private internet protocol address of a respective user plane function entity candidate and information on a public internet protocol address of said respective user plane function entity candidate.

According to example embodiments, the network function entity may be a session management function entity.

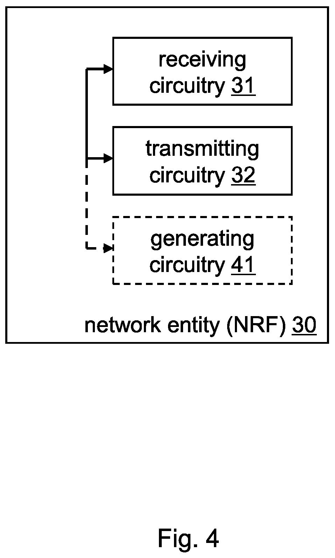

Figure 4 is a block diagram illustrating an apparatus according to example embodiments. In particular, Figure 4 illustrates a variation of the apparatus shown in Figure 3. The apparatus according to Figure 4 may thus further comprise a generating circuitry 41.

In an embodiment at least some of the functionalities of the apparatus shown in Figure 3 (or 4) may be shared between two physically separate devices forming one operational entity. Therefore, the apparatus may be seen to depict the operational entity comprising one or more physically separate devices for executing at least some of the described processes.

According to further example embodiments, each respective user plane function entity candidate entry of said at least one user plane function entity candidate entry comprises at least a delay value indicative of a delay between said respective user plane function entity candidate and a configured server entity.

According to further example embodiments, said server entity is a network address translation server entity.

According to a variation of the procedure shown in Figure 9, exemplary additional operations are given, which are inherently independent from each other as such. According to such variation, an exemplary method according to example embodiments may comprise an operation of receiving, from a plurality of user plane function entities, respective user plane function entity related information including at least said private internet protocol address of said respective user plane function entity and said public internet protocol address of said respective user plane function entity, and an operation of generating said user plane function entity candidate list based on said user plane function entity related information.

According to further example embodiments, said private internet protocol address is a private internet protocol address of said user plane function over a Data Network, and said public internet protocol address is a public internet protocol address of said user plane function over a Data Network derived from the private N6 internet protocol address by network address translation.

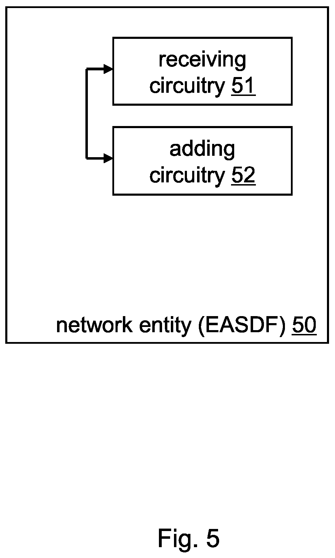

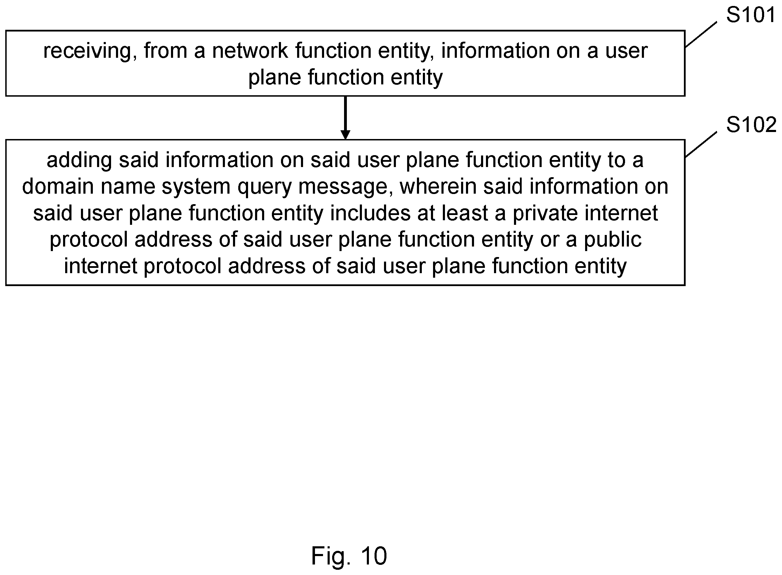

Figure 5 is a block diagram illustrating an apparatus according to example embodiments. The apparatus may be a network node or entity 50 such as an edge application servers discovery function entity (as an example of a server discovery function entity) comprising a receiving circuitry 51 and an adding circuitry 52. The apparatus 50 may be configured to perform the functions of one or more entities described in Figures 9 to 13. The receiving circuitry 51 receives, from a network function entity, information on a user plane function entity. The adding circuitry 52 adds said information on said user plane function entity to a domain name system query message. Here, said information on said user plane function entity includes at least a private internet protocol address of said user plane function entity or a public internet protocol address of said user plane function entity. Figure 10 is a schematic diagram of a procedure according to example embodiments. The apparatus according to Figure 5 may perform the method of Figure 10 but is not limited to this method. The method of Figure 10 may be performed by the apparatus of Figure 5 but is not limited to being performed by this apparatus.

As shown in Figure 10, a procedure according to example embodiments comprises an operation of receiving (S101), from a network function entity, information on one or more user plane function entity(ies), and an operation of adding (S102) said information on said user plane function entity to one or more domain name system query message (s). Here, said information on said user plane function entity includes at least a private internet protocol address of said user plane function entity or a public internet protocol address of said user plane function entity.

Figure 6 is a block diagram illustrating an apparatus according to example embodiments. In particular, Figure 6 illustrates a variation of the apparatus shown in Figure 5. The apparatus according to Figure 6 may thus further comprise a transmitting circuitry 61.

In an embodiment at least some of the functionalities of the apparatus shown in Figure 5 (or 6) may be shared between two physically separate devices forming one operational entity. Therefore, the apparatus may be seen to depict the operational entity comprising one or more physically separate devices for executing at least some of the described processes.

According to a variation of the procedure shown in Figure 10, exemplary additional operations are given, which are inherently independent from each other as such. According to such variation, an exemplary method according to example embodiments may comprise an operation of transmitting, towards a domain name system server entity, said domain name system query message.

According to further example embodiments, said private internet protocol address is a private internet protocol address of said user plane function over a Data Network, and said public internet protocol address is a public internet protocol address of said user plane function over a Data Network derived from the private N6 internet protocol address by network address translation.

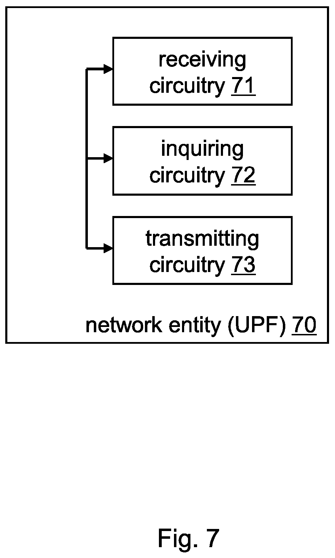

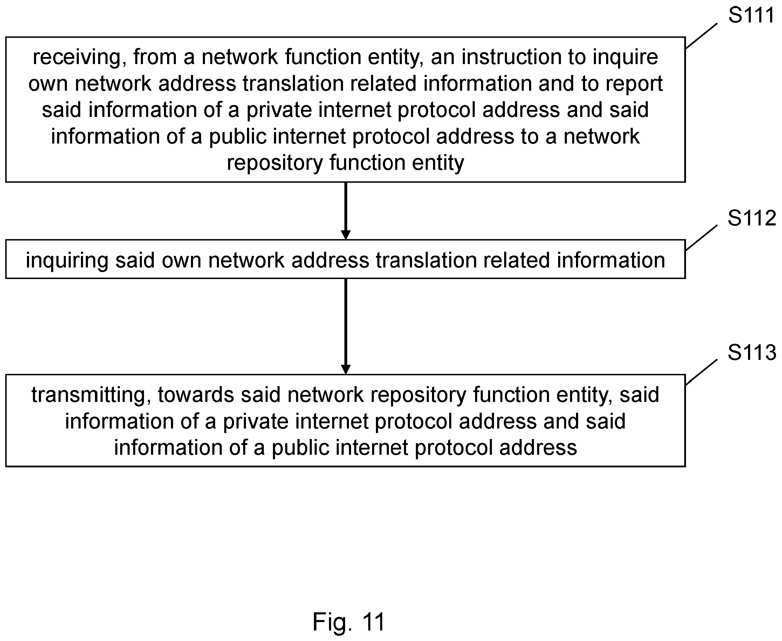

Figure 7 is a block diagram illustrating an apparatus according to example embodiments. The apparatus may be a network node or entity 70 such as an user plane function entity comprising a receiving circuitry 71, an inquiring circuitry 72, and a transmitting circuitry 73. The apparatus 70 may be configured to perform the functions of one or more entities described in Figures 9 to 13. The receiving circuitry 71 receives, from a network function entity, an instruction to inquire own network address translation related information and to report said information of a private internet protocol address and said information of a public internet protocol address to a network repository function entity. The inquiring circuitry 72 inquires said own network address translation related information. The transmitting circuitry 73 transmits, towards said network repository function entity, said information of a private internet protocol address and said information of a public internet protocol address. Figure 11 is a schematic diagram of a procedure according to example embodiments. The apparatus according to Figure 7 may perform the method of Figure 11 but is not limited to this method. The method of Figure 11 may be performed by the apparatus of Figure 7 but is not limited to being performed by this apparatus.

As shown in Figure 11, a procedure according to example embodiments comprises an operation of receiving (S111), from a network function entity, an instruction to inquire own network address translation related information and to report said information of a private internet protocol address and said information of a public internet protocol address to a network repository function entity, an operation of inquiring (S112) said own network address translation related information, and an operation of transmitting (S113), towards said network repository function entity, said information of a private internet protocol address and said information of a public internet protocol address.

In an embodiment at least some of the functionalities of the apparatus shown in Figure 7 may be shared between two physically separate devices forming one operational entity. Therefore, the apparatus may be seen to depict the operational entity comprising one or more physically separate devices for executing at least some of the described processes.

According to further example embodiments, said private internet protocol address is a private internet protocol address of said user plane function over a Data Network, and said public internet protocol address is a public internet protocol address of said user plane function over a Data Network derived from the private N6 internet protocol address by network address translation.

It is noted that while example embodiments are described in particular in relation to EASDF, the principles underlying the example embodiments are applicable also to cases not related with EASDF as follows:
In some configurations, the EASDF cannot or does not apply. Applicative mechanisms (HTTP redirect) are used to tell the UE the IP address of the EAS server to contact to access to the service/application. The UE initiates a service request to an anycast address (that does not change with UE location, thus the EASDF does not apply/help here). The application discovery server at this anycast address redirects the UE with an HTTP URI that maps to the most appropriate EAS for the UE to get the service (again no use of EASDF). This URI may directly contain the IP address of the EAS (this is briefly described e.g. in3GPP TS 23.548 Annex B).

Depending on the UE location,
- some EAS servers may be deployed to be reachable via a private address (very local EAS whose access does not require NAT) (typical example, the EAS for football related applications is deployed very locally in football stadium areas),
- other EAS servers may be deployed to be reachable via a public address (less local EAS whose access requires NAT).

The SMF is configured via PCC rules derived from Nnef_TrafficInfluence API(s) (defined in TS 23.502 clause 5.2.6.7) invoked by the AF (which is the application discovery server). Such rules contain the EAS address which may be a private or a public IP address depending on the UE location.

The SMF needs to select a UPF that serves the UE location and that is the closest to the EAS address in use for the UE location. To do so it invokes the NRF to discover the N6 addresses of the UPF (public/private).

Example embodiments outlined and defined above are described below in more detail.

In particular, according to example embodiments, a modified Table 6.1.6.2.24-1 (definition of the type InterfaceUpfInfoItem) of the 3GPP TS 29.510 as illustrated below is utilized. The SMF may provide the above-mentioned information for ECS option in a DNS query to the EASDF populated with the N6 interface addresses of the candidate UPF as defined in this modified Table.

This modification includes the addition of the NATted endpoint addresses. This modification may further include a delay value indicative of a delay between the UPF and a server on the Public Internet which may be a STUN server.

| Attribute name | Data type | P | Cardi nality | Description |
|---|---|---|---|---|
| interfaceType | UPInterfaceTyp e | M | 1 | User Plane interface type |
| ipv4EndpointAddresses | array(Ipv4Addr ) | C | 1..N | Available endpoint IPv4 address(es) of the User Plane |
| | | | | interface (NOTE 1) (NOTE 2) |
| ipv6EndpointAddresses | array(Ipv6Addr ) | C | 1..N | Available endpoint IPv6 address(es) of the User Plane interface (NOTE 1) (NOTE 2) |
| NATtedipv4EndpointAddress es | array(Ipv4Addr ) | C | 1..N | Available endpoint IPv4 address(es) of the User Plane interface (NOTE 1) (NOTE 2) |
| NATtedipv6EndpointAddress es | array(Ipv6Addr ) | C | 1..N | Available endpoint IPv6 address(es) of the User Plane interface (NOTE 1) (NOTE 2) |
| N6 delay between UPF and the Public Internet | | | | |
| endpointFqdn | Fqdn | C | 0..1 | FQDN of available endpoint of the User Plane interface (NOTE 1) (NOTE 2) |
| networkInstance | string | O | 0..1 | Network Instance (See 3GPP 29.244 [21] ) associated to the User Plane interface |

According to example embodiments, the SMF retrieves the UpfInfoItem for candidate UPFs from the NRF.

If a NATted IP address is provided in the information (the UpfInfoItem) received from the NRF, according to example embodiments, the SMF instructs the EASDF to populate additionally the ECS option with the NATted public IP address.

Additionally, according to further example embodiments, the UPF is instructed to record/store and publish the half of the time difference between sending a query and receiving a response from a server like a STUN server that is deployed on the public Internet in the UpfInfoItem as an estimation for the N6 delay for selecting the best UPF for the ECS option in order to select the best UPF/EAS pair at the later stage of the procedure.

Thus, according to example embodiments, there are two occurrences of N6 addresses related with an UPF (N6 on the private DN, Public N6 addresses) available in NRF information related with UPF (UPFInfo).

Further, according to example embodiments, these N6 addresses related with an UPF information are used to populate the ECS.

Furthermore, according to example embodiments, an ability to provide at least two instances of information to build the DNS ECS option to the EADSF is enabled.

Finally, according to example embodiments, OAM and/or SMF instructs the UPFs to perform a NAT discovery procedure like STUN, and, when the UPF has detected NAT over N6, the UPF reports at least two N6 addresses and their corresponding N6 delay between UPF and a server (e.g. STUN) on the public Internet to the NRF.

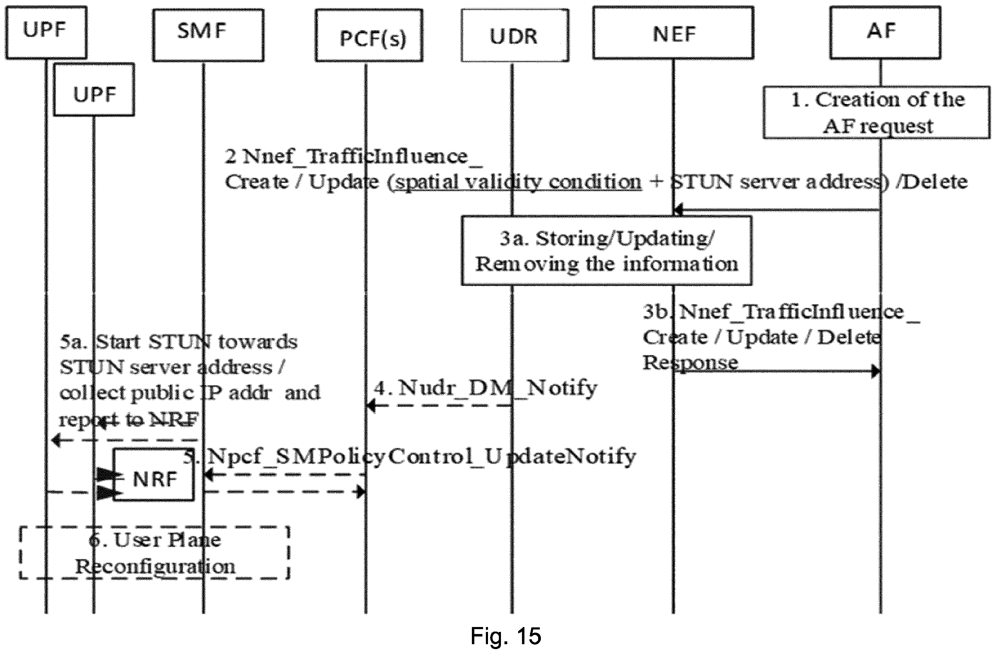

Figure 15 shows a schematic diagram of signaling sequences in relation to application function traffic routing influence request processing according to example embodiments, and in particular shows a modification of the processing illustrated in Figure 14 according to example embodiments.

The processing is modified according to example embodiments in that in step 2 of the processing shown in Figure 15, the Nnef_TrafficInfluence_Create/Update request includes information on a spatial validity condition and information on a STUN server address. Likewise, steps 3a, 4 and 5 may include information on the NAT discovery e.g. STUN server address: policy control information in step 5 may deliver the NAT discovery e.g. STUN server address. It has to be noted that step 5 may correspond to a Npcf_SMPolicyControl_UpdateNotify operation as in the drawing but also to a Npcf_SMPolicyControl_Create operation.

The processing is further modified according to example embodiments in that in a step 5a of the processing shown in Figure 15, the SMF instructs the UPF(s) to start STUN towards a (the received) STUN server address and/or to collect the public IP address(es) and to report the same to the NRF.

That is, according to example embodiments, the AF may indicate the potential use of NAT to the network. The AF may do so by inserting a STUN server address together with the spatial validity into the AF TrafficInfluence operation.

That is, further, according to example embodiments, the SMF may receive the STUN server address together with spatial validity condition in step 5 of the processing shown in Figure 15 and may instruct the UPFs in step 5a of the processing shown in Figure 15 to perform STUN towards the STUN server addresses for a given DNN.

The N4 signaling between SMF and UPF (as specified e.g. in 3GPP TS 29.244) may be updated in line with example embodiments.

That is, further, according to example embodiments, when the UPF has detected NAT and got the public IP address associated to its N6 interface, the UPF reports the public IP address to the NRF in step 5a of the processing shown in Figure 15. The NRF then updates the definition of type InterfaceUpfInfoItem in line with the modified Table 6.1.6.2.24-1 of the 3GPP TS 29.510 as illustrated above (modified according to example embodiments).

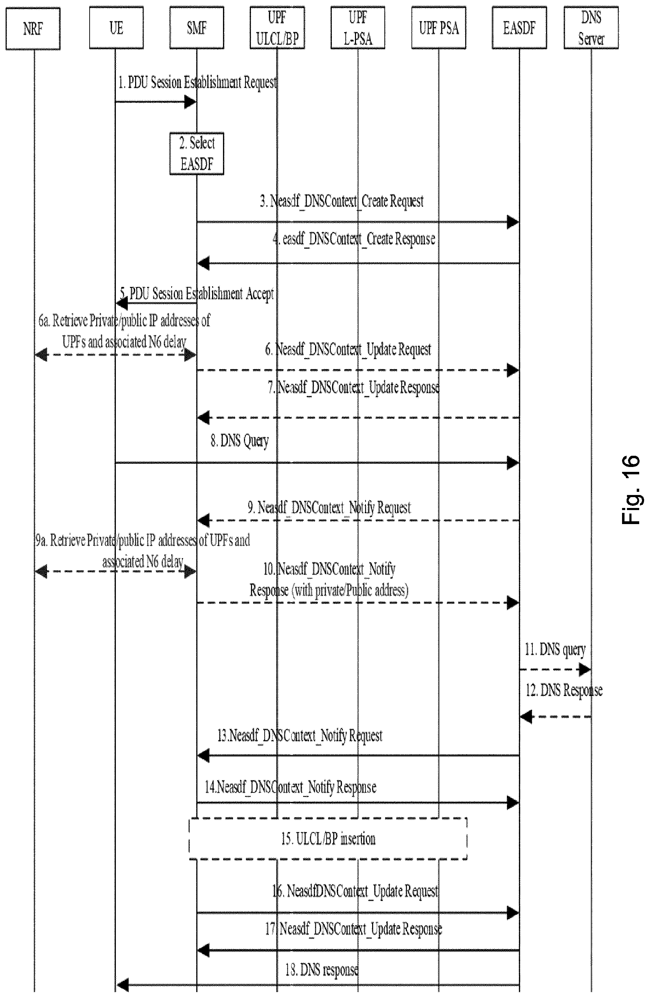

Figure 16 shows a schematic diagram of signaling sequences in relation to an edge application servers discovery procedure according to example embodiments, and in particular shows a modification of the EAS discovery procedure using EASDF illustrated in Figure 12 according to example embodiments.

In particular, the EAS discovery procedure is modified according to example embodiments in that the SMF retrieves from the NRF the private and public IP addresses of UPFs on N6 and a respectively associated N6 delay. SMF may retrieve in a step 6a of the EAS discovery procedure illustrated in Figure 16 or in a step 9a of the EAS discovery procedure illustrated in Figure 16, the SMF retrieves from the NRF the private and public IP addresses of UPFs on N6 and a respectively associated N6 delay. The EAS discovery procedure is modified according to example embodiments in that in step 10 of the EAS discovery procedure illustrated in Figure 16, the Neasdf_DNSContext_Notify Response includes the private/public address.

That is, according to example embodiments, in a subsequent step, the UE may establish a PDU session and issue a DNS request.

The EAS discovery (e.g. according to 3GPP TS 23.548) is performed, wherein, for the NAT case, the modifications according to example embodiments as illustrated in Figure 16 are conserved to such an extent that in step 6a or 9a the SMF queries the NRF for the candidate list of UPFs available for populating the information for ECS options.

Since the N6 delay is associated with the NATted public address for the UPF, according to example embodiments, the SMF may select information for ECS option which matches best the end to end delay from RAN via UPF and to the STUN server and forward the information for ECS options to the EASDF in step 6 or 10 of Figure 16.

Concrete details of an EAS discovery procedure with an EASDF according to example embodiments are elaborately described below also with reference to Figure 16.

For the case that the UE DNS Query is to be handled by EASDF, the following applies.
- During the PDU Session establishment procedure, the SMF selects an EASDF and provides its address to the UE as the DNS Server to be used for the PDU Session. The UE sends DNS Query to the EASDF. The SMF may configure the EASDF with DNS message handling rules to forward DNS messages of the UE to a relevant DNS server (DNS message forwarding rule) and/or report when detecting DNS messages (DNS message reporting rule): The DNS message handling rules may include a DNS message type (i.e. DNS Query or DNS Response), IP address range(s) or FQDN range(s) in DNS Answer field or FQDN range(s) in DNS Query field.
   The SMF may use following information to create DNS message handling rules associated with a PDU session:
   - Local configuration associated with the (DNN, S-NSSAI) of the PDU Session,
   - AF influenced Traffic Steering Enforcement Control information within PCC rules (For example, the SMF can derive the FQDN (ranges) of interest from AF influenced Traffic Steering Enforcement Control information within PCC rules), and/or
   - Information derived from the UE location such as a list of candidate L-PSA (For example, the SMF can derive from the N6 IP address of local PSA the IP address information provided to the EASDF in order to build DNS ECS option).
   DNS message forwarding rules associated with DNS requests may include the DNS server address where the DNS request is to be forwarded and/or information (IP address) for the EASDF to build the ECS option to be added into the DNS request to be forwarded.
   DNS message reporting rules include the reporting condition for the EASDF to report the DNS information including EAS related information to SMF when it receives DNS Queries or DNS Responses.
- If the FQDN in a DNS Query matches the FQDN(s) provided by the SMF, based on instructions by SMF, one of the following options is executed by the EASDF:
   - Option A: The EASDF adds the EDNS Client Subnet (ECS) option into the DNS Query message as defined in RFC 7871[6], and sends the DNS Query message to the DNS server. The DNS server may resolve the EAS IP address considering the ECS option, and sends the DNS Response to the EASDF.
      The SMF may provide in a DNS message forwarding rule one or multiple IP addresses to be used by the EASDF to create ECS options; the SMF may determine these IP addresses based on the N6 IP address associated with candidate L-PSA(s).
      Providing multiple IP addresses in a DNS message forwarding rule can be used when a candidate L-PSA maps to both private and public N6 IP addresses. It can also be used when the SMF has detected multiple potential L-PSA candidates.
   - Option B: The EASDF forwards the DNS Query message to a suitable Local DNS server which is responsible for resolving the EAS address within the corresponding Local DN. The EASDF receives the DNS Response message from the Local DNS server.
      Option B does not support the scenario where the EASDF has no direct connectivity with the local DNS servers.
      The SMF instructions for a matching FQDN may as well indicate EASDF to contact SMF (DNS message reporting rule). SMF then provides the EASDF with a DNS message forwarding rule.
- If the DNS Query from the UE does not match a DNS message handling rules set by the SMF, then the EASDF may simply forward the DNS Query towards a preconfigured DNS server/resolver for DNS resolution.
- When the EASDF receives a DNS Response message, the EASDF may notify the EAS information (i.e. EAS IP address(es) , optionally the EAS FQDN and optionally the corresponding IP address within the ECS DNS option) to the SMF if the DNS message reporting condition provided by the SMF is met.

The SMF may then trigger UL CL/BP and L-PSA insertion as specified in clause 6.3.3 in TS 23.501 based on the Notification.
The ECS option or the Local DNS server address provided by the SMF to the EASDF are part of the rules to handle DNS queries from the UE. They are related to candidate DNAI(s) for that FQDN for the UE location. The SMF may provide rules to handle DNS queries from the UE to the EASDF when the SMF establishes the association with the EASDF for the UE, and may update the rules at any time when the association exists. For the selection of the candidate DNAI(s) for an FQDN for the UE, the SMF may consider the UE location, network topology and information of EAS deployment received as part of PCC rules. After the UE mobility, if the provided Information for ECS option or the Local DNS server address needs be updated, the SMF may change the rules to handle DNS queries from the UE to the EASDF.
The sentence above means that the EASDF gets the FQDN(s) from SMF. How the EASDF gets the Local DNS server address needs to be clarified.

Once the UL CL/BP and L-PSA have been inserted, the SMF may decide that the DNS messages for the FQDN are to be handled by local DNS resolver/server from now on. This option may be further described e.g. in clause 6.2.3.2.3 of 3GPP TS 23.548.

In a step 1 of the processing according to example embodiments shown in Figure 16, the UE sends a PDU Session Establishment Request to the SMF e.g. as shown in step 1 of clause 4.3.2.2.1 of 3GPP TS 23.502.

In a step 2 of the processing according to example embodiments shown in Figure 16, the SMF selects an EASDF as described in any clause 6.3.x of 3GPP TS 23.501.

In a step 3 of the processing according to example embodiments shown in Figure 16, the SMF invokes a Neasdf_DNSContext_Create Request (UE IP address, callback URI, rules to handle DNS messages from the UE) to the selected EASDF. The rules to handle DNS messages from the UE (i.e. DNS message handling rule) may include a DNS message forwarding rule and/or a DNS message reporting rule.

This step is performed before step 11 of PDU Session Establishment procedure in clause 4.3.2.2.1 of 3GPP TS 23.502.

The EASDF creates a DNS context for the PDU Session, and stores the UE IP address, the callback URI and rules to handle DNS messages from the UE into the context.
- For EASDF to process a DNS Query for ECS options or local DNS server address handling, the SMF may provide the reporting rule to instruct the EASDF to send the EAS FQDN(s) to the SMF, if the EAS FQDN in the DNS Query message matches with the FQDN(s) filters in the DNS message reporting rule.
- For EASDF to process a DNS Response for a specific IP address or FQDN ranges, the SMF provides the reporting rule to instruct the EASDF to report EAS IP address/FQDN to the SMF, if the EAS IP address in the DNS Responses message matches one of the IP address range(s) of the reporting rule, or the FQDN in the DNS Response matches one of the FQDNs in the DNS message reporting rule.

The EASDF is provisioned with the forwarding rule(s), before the DNS Query message is received at the EASDF or as a consequence of the DNS Query reporting.

In a step 4 of the processing according to example embodiments shown in Figure 16, the EASDF invokes the service operation Neasdf_DNSContext_Create Response () with information allowing later the SMF to update or delete the context.

In a step 5 of the processing according to example embodiments shown in Figure 16, the SMF includes the IP address of the EASDF as a DNS server in a PDU Session Establishment Accept message as in step 11 of clause 4.3.2.2.1 of 3GPP TS 23.502. The UE configures the EASDF as DNS server for that PDU Session.

It may be guaranteed that the UE uses the EASDF's IP address for the subsequent DSN Query in step 8.

In a step 6 of the processing according to example embodiments shown in Figure 16, the SMF may invoke a Neasdf_DNSContext_Update Request (PDU Session Context ID, rules to handle DNS queries from the UE) to the EASDF. The update may be triggered by UE mobility, e.g. when the UE moves to a new location, or by a reporting by EASDF of a DNS Query with certain FQDN, or the update may be triggered by insertion/removal of a Local PSA, e.g. to update rules to handle DNS messages from the UE or by new PCC rule information.

The AF-triggered DNS server information change may trigger a DNS context update procedure.

In a step 7 of the processing according to example embodiments shown in Figure 16, the EASDF responds with a Neasdf_DNSContext_Update Response.

In a step 8 of the processing according to example embodiments shown in Figure 16, the UE sends a DNS Query message to the EASDF.

In a step 9 of the processing according to example embodiments shown in Figure 16, if the DNS Query message matches the DNS message reporting condition for the UE, the EASDF sends the DNS message report to SMF by invoking a Neasdf_DNSContext_Notify Request.

In a step 10 of the processing according to example embodiments shown in Figure 16, the SMF responds with a Neasdf_DNSContext_Notify Response.

For Option A, the SMF may include a corresponding information for ECS option in the response message. For Option B, the SMF may include a corresponding local DNS Server IP address in the response message. The EASDF may as well be instructed to simply forward the DNS Query to a pre-configured DNS server/resolver.

In a step 11 of the processing according to example embodiments shown in Figure 16, the EASDF handles the DNS Query message received from the UE as the following:
- For Option A, the EASDF adds the ECS option into the DNS Query message as specified in RFC 7871 and sends it to a C-DNS server,
- For Option B, the EASDF sends the DNS Query message to the Local DNS server.

If neither a reporting nor a forwarding rule provided by the SMF matches the requested FQDN in the DNS Query, the EASDF may simply forward the DNS Query to a pre-configured DNS server/resolver.

In a step 12 of the processing according to example embodiments shown in Figure 16, the EASDF receives DNS Responses from the DNS system and determines that a DNS Response can be sent to the UE.

In a step 13 of the processing according to example embodiments shown in Figure 16, the EASDF may send a DNS message reporting information to an SMF by invoking a Neasdf_DNSContext_Notify request including EAS information, if the EAS IP address or the FQDN in the DNS Response message matches the reporting condition provided by the SMF.

The EASDF does not send the DNS Response message to the UE but waits for SMF instructions (in step 14 or step 16).

In a step 14 of the processing according to example embodiments shown in Figure 16, the SMF invokes a Neasdf_DNSContext_Notify Response service operation.

A DNS message handling rule might be transferred in a Notify Response message. Otherwise, the might SMF need to invoke an additional NF service similar to the step 6.

The SMF might send the DNS message handling rule to the EASDF to instruct the EASDF whether to buffer the DNS Response.

In a step 15 of the processing according to example embodiments shown in Figure 16, the SMF may perform a UL CL/BP and Local PSA selection and insert a UL CL/BP and Local PSA.

Based on received EAS information received from the EASDF and other UPF selection criteria, as specified in clause 6.3.3 in 3GPP TS 23.501, the SMF may perform UL CL/BP and Local PSA selection and insertion as described in 3GPP TS 23.502.

In a step 16 of the processing according to example embodiments shown in Figure 16, the SMF invokes a Neasdf_DNSContext_Update Request (forward DNS response indication).

The forward DNS response indication is used to indicate the EASDF to forward the cached DNS Response received in Step 12 to the UE.

In a step 17 of the processing according to example embodiments shown in Figure 16, the EASDF responds with a Neasdf_DNSContext_Update Response.

In a step 18 of the processing according to example embodiments shown in Figure 16, the EASDF sends the DNS Response to the UE.

The above-described procedures and functions may be implemented by respective functional elements, processors, or the like, as described below.

In the foregoing exemplary description of the network entity, only the units that are relevant for understanding the principles of the disclosure have been described using functional blocks. The network entity may comprise further units that are necessary for its respective operation. However, a description of these units is omitted in this specification. The arrangement of the functional blocks of the devices is not construed to limit the disclosure, and the functions may be performed by one block or further split into sub-blocks.

When in the foregoing description it is stated that the apparatus, i.e. network entity (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is construed to be equivalent to an expression such as "means for").

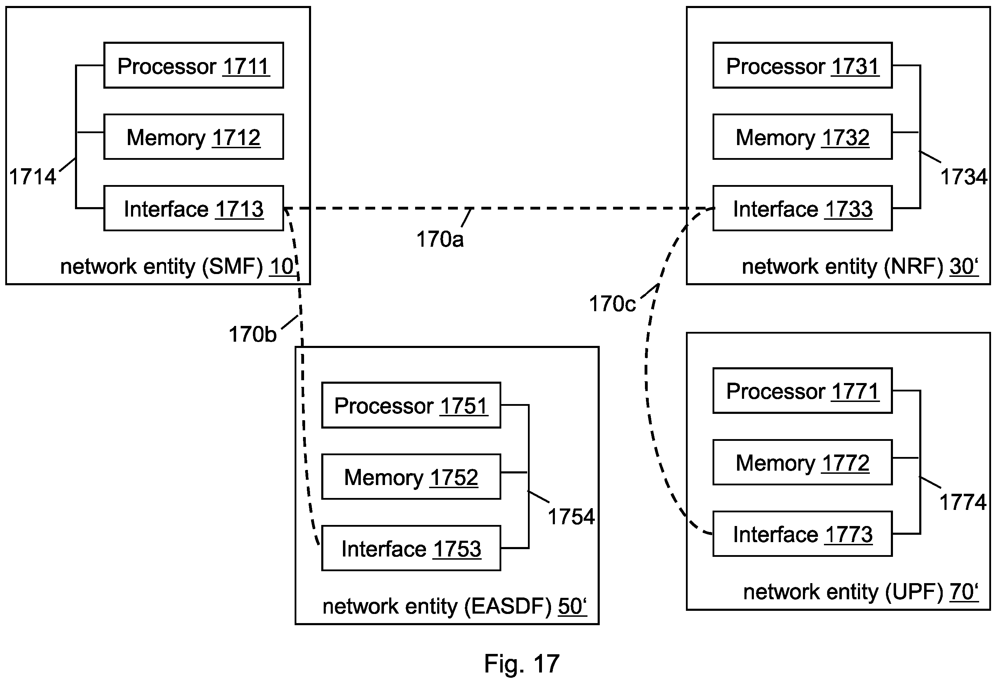

In Figure 17, an alternative illustration of apparatuses according to example embodiments is depicted. As indicated in Figure 17, according to example embodiments, the apparatus (network entity) 10' (corresponding to the network entity 10) comprises a processor 1711, a memory 1712 and an interface 1713, which are connected by a bus 1714 or the like. Further, according to example embodiments, the apparatus (network entity) 30' (corresponding to the network entity 30) comprises a processor 1731, a memory 1732 and an interface 1733, which are connected by a bus 1734 or the like. Further, according to example embodiments, the apparatus (network entity) 50' (corresponding to the network entity 50) comprises a processor 1751, a memory 1752 and an interface 1753, which are connected by a bus 1754 or the like. Further, according to example embodiments, the apparatus (network entity) 70' (corresponding to the network entity 70) comprises a processor 1771, a memory 1772 and an interface 1773, which are connected by a bus 1774 or the like. The apparatuses may be connected via links 170a, 170b, 170c, respectively.

The processor 1711/1731/1751/1771 and/or the interface 1713/1733/1753/1773 may also include a modem or the like to facilitate communication over a (hardwire or wireless) link, respectively. The interface 1713/1733/1753/1773 may include a suitable transceiver coupled to one or more antennas or communication means for (hardwire or wireless) communications with the linked or connected device(s), respectively. The interface 1713/1733/1753/1773 is generally configured to communicate with at least one other apparatus, i.e. the interface thereof.

The memory 1712/1732/1752/1772 may store respective programs assumed to include program instructions or computer program code that, when executed by the respective processor, enables the respective electronic device or apparatus to operate in accordance with the example embodiments.

In general terms, the respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

When in the subsequent description it is stated that the processor (or some other means) is configured to perform some function, this is to be construed to be equivalent to a description stating that at least one processor, potentially in cooperation with computer program code stored in the memory of the respective apparatus, is configured to cause the apparatus to perform at least the thus mentioned function. Also, such function is to be construed to be equivalently implementable by specifically configured means for performing the respective function (i.e. the expression "processor configured to [cause the apparatus to] perform xxx-ing" is construed to be equivalent to an expression such as "means for xxx-ing").

According to example embodiments, an apparatus representing the network entity 10 comprises at least one processor 1711, at least one memory 1712 including computer program code, and at least one interface 1713 configured for communication with at least another apparatus. The processor (i.e. the at least one processor 1711, with the at least one memory 1712 and the computer program code) is configured to perform receiving, from a network repository function entity, a user plane function entity candidate list including at least one user plane function entity candidate entry, wherein each respective user plane function entity candidate entry of said candidate list comprises at least information on a private internet protocol address of the respective user plane function entity candidate and information on a public internet protocol address of said respective user plane function entity candidate (thus the apparatus comprising corresponding means for receiving), and to perform selecting at least one user plane function entity from said user plane function entity candidate list (thus the apparatus comprising corresponding means for selecting).

Further, according to example embodiments, an apparatus representing the network entity 30 comprises at least one processor 1731, at least one memory 1732 including computer program code, and at least one interface 1733 configured for communication with at least another apparatus. The processor (i.e. the at least one processor 1731, with the at least one memory 1732 and the computer program code) is configured to perform receiving, from a network function entity, a query for a user plane function entity candidate list (thus the apparatus comprising corresponding means for receiving), and to perform transmitting, towards said network function entity, said user plane function entity candidate list including at least one user plane function entity candidate entry, wherein each respective user plane function entity candidate entry of said at least one user plane function entity candidate entry comprises at least information on a private internet protocol address of a respective user plane function entity candidate and information on a public internet protocol address of said respective user plane function entity candidate (thus the apparatus comprising corresponding means for transmitting).

Further, according to example embodiments, an apparatus representing the network entity 50 comprises at least one processor 1751, at least one memory 1752 including computer program code, and at least one interface 1753 configured for communication with at least another apparatus. The processor (i.e. the at least one processor 1751, with the at least one memory 1752 and the computer program code) is configured to perform receiving, from a network function entity, information on a user plane function entity (thus the apparatus comprising corresponding means for receiving), and to perform adding said information on said user plane function entity to a domain name system query message, wherein said information on said user plane function entity includes at least a private internet protocol address of said user plane function entity or a public internet protocol address of said user plane function entity (thus the apparatus comprising corresponding means for adding).

Further, according to example embodiments, an apparatus representing the network entity 70 comprises at least one processor 1771, at least one memory 1772 including computer program code, and at least one interface 1773 configured for communication with at least another apparatus. The processor (i.e. the at least one processor 1771, with the at least one memory 1772 and the computer program code) is configured to perform receiving, from a network function entity, an instruction to inquire own network address translation related information and to report said information of a private internet protocol address and said information of a public internet protocol address to a network repository function entity (thus the apparatus comprising corresponding means for receiving), to perform inquiring said own network address translation related information (thus the apparatus comprising corresponding means for inquiring), and to perform transmitting, towards said network repository function entity, said information of a private internet protocol address and said information of a public internet protocol address (thus the apparatus comprising corresponding means for transmitting).

For further details regarding the operability/functionality of the individual apparatuses, reference is made to the above description in connection with any one of Figures 1 to 16, respectively.

The following concrete aspects are disclosed herein:
Aspect 1. A method comprising
   receiving, from a network repository function entity, a user plane function entity candidate list including at least one user plane function entity candidate entry, wherein each respective user plane function entity candidate entry of said candidate list comprises at least information on a private internet protocol address of the respective user plane function entity candidate and information on a public internet protocol address of said respective user plane function entity candidate, and
   selecting at least one user plane function entity from said user plane function entity candidate list.
Aspect 2. The method according to aspect 1, further comprising
   transmitting, towards a server discovery function entity, information on said user plane function entity, wherein
   said information on said user plane function entity includes at least said private internet protocol address of said user plane function entity and said public internet protocol address of said user plane function entity.
Aspect 3. The method according to aspect 1 or 2, further comprising
   transmitting, towards said network repository function entity, a query for said user plane function entity candidate list.
Aspect 4. The method according to any of aspects 1 to 3, wherein
   each respective user plane function entity candidate entry of said at least one user plane function entity candidate entry comprises at least a delay value indicative of a delay between said respective user plane function entity and a configured server entity.
Aspect 5. The method according to aspect 4, wherein
   said server entity is a network address translation server entity.
Aspect 6. The method according to aspect 4 or 5, wherein
   said selecting is based on said respective delay.
Aspect 7. The method according to any of aspects 1 to 6, further comprising
   transmitting, towards at least one user plane function entity, an instruction for said at least user plane function entity to inquire own network address translation related information and to report said information of a private internet protocol address of said at least user plane function entity and said information of a public internet protocol address of said at least user plane function entity to a network repository function entity.
Aspect 8. A method comprising
   receiving, from a network function entity, a query for a user plane function entity candidate list, and
   transmitting, towards said network function entity, said user plane function entity candidate list including at least one user plane function entity candidate entry, wherein each respective user plane function entity candidate entry of said at least one user plane function entity candidate entry comprises at least information on a private internet protocol address of a respective user plane function entity candidate and information on a public internet protocol address of said respective user plane function entity candidate.
Aspect 9. The method according to aspect 8, wherein
   each respective user plane function entity candidate entry of said at least one user plane function entity candidate entry comprises at least a delay value indicative of a delay between said respective user plane function entity candidate and a configured server entity.
Aspect 10. The method according to aspect 9, wherein
   said server entity is a network address translation server entity.
Aspect 11. The method according to any of aspects 8 to 10, further comprising
   receiving, from a plurality of user plane function entities, respective user plane function entity related information including at least said private internet protocol address of said respective user plane function entity and said public internet protocol address of said respective user plane function entity, and
   generating said user plane function entity candidate list based on said user plane function entity related information.
Aspect 12. A method comprising
   receiving, from a network function entity, information on a user plane function entity, and
   adding said information on said user plane function entity to a domain name system query message, wherein
   said information on said user plane function entity includes at least a private internet protocol address of said user plane function entity or a public internet protocol address of said user plane function entity.
Aspect 13. The method according to aspect 12, further comprising
   transmitting, towards a domain name system server entity, said domain name system query message.
Aspect 14. A method comprising
   receiving, from a network function entity, an instruction to inquire own network address translation related information and to report said information of a private internet protocol address and said information of a public internet protocol address to a network repository function entity,
   inquiring said own network address translation related information, and
   transmitting, towards said network repository function entity, said information of a private internet protocol address and said information of a public internet protocol address.
Aspect 15. The method according to any of aspects 1 to 14, wherein
   said private internet protocol address is a private N6 internet protocol address, and
   said public internet protocol address is a public N6 internet protocol address derived from the private N6 internet protocol address by network address translation.
Aspect 16. An apparatus comprising
   at least one processor,
   at least one memory including computer program code, and
   at least one interface configured for communication with at least another apparatus,
   the at least one processor, with the at least one memory and the computer program code, being configured to cause the apparatus to perform:
      receiving, from a network repository function entity, a user plane function entity candidate list including at least one user plane function entity candidate entry, wherein each respective user plane function entity candidate entry of said candidate list comprises at least information on a private internet protocol address of the respective user plane function entity candidate and information on a public internet protocol address of said respective user plane function entity candidate, and
      selecting at least one user plane function entity from said user plane function entity candidate list.
Aspect 17. The apparatus according to aspect 16, wherein
   the at least one processor, with the at least one memory and the computer program code, being configured to cause the apparatus to perform:
   transmitting, towards a server discovery function entity, information on said user plane function entity, wherein
   said information on said user plane function entity includes at least said private internet protocol address of said user plane function entity and said public internet protocol address of said user plane function entity.
Aspect 18. The apparatus according to aspect 16 or 17, wherein
   the at least one processor, with the at least one memory and the computer program code, being configured to cause the apparatus to perform:
   transmitting, towards said network repository function entity, a query for said user plane function entity candidate list.
Aspect 19. The apparatus according to any of aspects 16 to 18, wherein
   each respective user plane function entity candidate entry of said at least one user plane function entity candidate entry comprises at least a delay value indicative of a delay between said respective user plane function entity and a configured server entity.
Aspect 20. The apparatus according to aspect 19, wherein
   said server entity is a network address translation server entity.
Aspect 21. The apparatus according to aspect 19 or 20, wherein
   said selecting is based on said respective delay.
Aspect 22. The apparatus according to any of aspects 16 to 21, wherein
   the at least one processor, with the at least one memory and the computer program code, being configured to cause the apparatus to perform:
   transmitting, towards at least one user plane function entity, an instruction for said at least user plane function entity to inquire own network address translation related information and to report said information of a private internet protocol address of said at least user plane function entity and said information of a public internet protocol address of said at least user plane function entity to a network repository function entity.
Aspect 23. An apparatus comprising
   at least one processor,
   at least one memory including computer program code, and
   at least one interface configured for communication with at least another apparatus,
   the at least one processor, with the at least one memory and the computer program code, being configured to cause the apparatus to perform:
      receiving, from a network function entity, a query for a user plane function entity candidate list, and
      transmitting, towards said network function entity, said user plane function entity candidate list including at least one user plane function entity candidate entry, wherein each respective user plane function entity candidate entry of said at least one user plane function entity candidate entry comprises at least information on a private internet protocol address of a respective user plane function entity candidate and information on a public internet protocol address of said respective user plane function entity candidate.
Aspect 24. The apparatus according to aspect 23, wherein
   each respective user plane function entity candidate entry of said at least one user plane function entity candidate entry comprises at least a delay value indicative of a delay between said respective user plane function entity candidate and a configured server entity.
Aspect 25. The apparatus according to aspect 24, wherein
   said server entity is a network address translation server entity.
Aspect 26. The apparatus according to any of aspects 23 to 25, wherein
   the at least one processor, with the at least one memory and the computer program code, being configured to cause the apparatus to perform:
   receiving, from a plurality of user plane function entities, respective user plane function entity related information including at least said private internet protocol address of said respective user plane function entity and said public internet protocol address of said respective user plane function entity, and
   generating said user plane function entity candidate list based on said user plane function entity related information.
Aspect 27. An apparatus comprising
   at least one processor,
   at least one memory including computer program code, and
   at least one interface configured for communication with at least another apparatus,
   the at least one processor, with the at least one memory and the computer program code, being configured to cause the apparatus to perform:
      receiving, from a network function entity, information on a user plane function entity, and
      adding said information on said user plane function entity to a domain name system query message, wherein
      said information on said user plane function entity includes at least a private internet protocol address of said user plane function entity or a public internet protocol address of said user plane function entity.
Aspect 28. The apparatus according to aspect 27, wherein
   the at least one processor, with the at least one memory and the computer program code, being configured to cause the apparatus to perform:
   transmitting, towards a domain name system server entity, said domain name system query message.
Aspect 29. An apparatus comprising
   at least one processor,
   at least one memory including computer program code, and
   at least one interface configured for communication with at least another apparatus,
   the at least one processor, with the at least one memory and the computer program code, being configured to cause the apparatus to perform:
      receiving, from a network function entity, an instruction to inquire own network address translation related information and to report said information of a private internet protocol address and said information of a public internet protocol address to a network repository function entity,
      inquiring said own network address translation related information, and
      transmitting, towards said network repository function entity, said information of a private internet protocol address and said information of a public internet protocol address.
Aspect 30. The apparatus according to any of aspects 26 to 29, wherein
   said private internet protocol address is a private internet protocol address of said user plane function over a Data Network, and
   said public internet protocol address is a public internet protocol address of said user plane function over a Data Network derived from the private N6 internet protocol address by network address translation.

For the purpose of the present disclosure as described herein above, it should be noted that
- method steps likely to be implemented as software code portions and being run using a processor at a network server or network entity (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
- devices, units or means (e.g. the above-defined network entity or network register, or any one of their respective units/means) can be implemented as individual devices, units or means, but this does not exclude that they are implemented in a distributed fashion throughout the system, as long as the functionality of the device, unit or means is preserved;
- an apparatus like the user equipment and the network entity /network register may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present disclosure. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

In view of the above, there are provided measures for an enhanced edge application server discovery *procedure.*

### List of acronyms and abbreviations

- 3GPP: Third Generation Partnership Project
- 5GC: 5th Generation core (network), 5G Core Network
- 5GS: 5G System
- 5G-AN: 5G Access Network
- AF: Application Function
- AMF: Access and Mobility Management Function
- DA: Destination Address
- DL: Downlink
- DN: Data Network
- DNN: Data Network Name
- DNS: Domain Name System

- EAS: Edge application server
- EASDF: edge application server discovery function
- ECS: EDNS client subnet
- EDNS: Extension Mechanisms for DNS
- FAR: Forwarding Rule
- FQDN: fully qualified domain name
- IP: internet protocol
- LBO: Local Breakout
- L-PSA: local PDU session anchor
- NEF: Network Exposure Function
- NAT: network address translation
- NF: network function
- PCF: Policy Control Function
- PFCP: Packet Forwarding Control Protocol
- PDR: Packet Detection Rule
- PDU: packet data unit

- PSA: PDU Session anchor/UPF functionality at the border (N6) of the DN
- (R)AN: (Radio) Access Network
- SCF: Service Classification Function
- SMF: Session Management Function
- S-NSSAI: Single Network Slice Selection Assistance Information
- STUN: simple traversal of UDP through NAT
- UE: user equipment
- UPF: user plane function

## Claims

1. An apparatus (10), said apparatus being a session management function entity and comprising:
transmitting circuitry (21) configured to transmit, towards a network repository function entity (30), a query for a user plane function entity candidate list,
receiving circuitry (11) configured to receive, from said network repository function entity (30), said user plane function entity candidate list including a plurality of user plane function entity candidate entries, wherein each respective user plane function entity candidate entry of said candidate list comprises at least information on a private internet protocol address of the respective user plane function entity candidate and information on a public internet protocol address of said respective user plane function entity candidate, and wherein said each respective user plane function entity candidate entry further comprises at least a delay value indicative of a delay on an N6 interface between said respective user plane function entity candidate and a configured server entity, and
selecting circuitry (12) configured to select at least one user plane function entity from said user plane function entity candidate list, wherein said selecting circuitry (12) is configured to select based on said respective delay.

2. The apparatus (10) according to claim 1, further comprising
transmitting circuitry (21) configured to transmit, towards an edge application server discovery function entity (50), information on said user plane function entity, wherein said information on said user plane function entity includes at least said private internet protocol address of said user plane function entity and said public internet protocol address of said user plane function entity.

3. The apparatus (10) according to claim 1 or 2, wherein said configured server entity is a network address translation server entity.

4. The apparatus (10) according to any of claims 1 to 3, further comprising
transmitting circuitry (21) configured to transmit, towards at least one user plane function entity (70), an instruction for said at least user plane function entity to inquire own network address translation related information and to report said own network address translation related information to said network repository function entity (30), wherein said own network address translation related information includes a private internet protocol address of said user plane function entity, a public internet protocol address of said user plane function entity, and a delay value indicative of a delay on an N6 interface between said user plane function entity and a configured server entity.

5. The apparatus (10) according to any of claims 1 to 4, wherein
said private internet protocol address is a private internet protocol address of said user plane function over a Data Network, and
said public internet protocol address is a public internet protocol address of said user plane function over a Data Network derived from the private N6 internet protocol address by network address translation.

6. An apparatus (30), said apparatus being a network repository function entity and comprising:
receiving circuitry (31) configured to receive, from a plurality of user plane function entities, respective user plane function entity related information including at least a private internet protocol address of said respective user plane function entity, a public internet protocol address of said respective user plane function entity, and a delay value indicative of a delay on an N6 interface between said respective user plane function entity and a configured server entity,
generating circuitry configured to generate a user plane function entity candidate list based on said user plane function entity related information, wherein said user plane function entity candidate list includes a plurality of user plane function entity candidate entries, wherein each respective user plane function entity candidate entry of said user plane function entity candidate list comprises at least information on said private internet protocol address of said respective user plane function entity candidate and information on said public internet protocol address of said respective user plane function entity candidate, wherein said each respective user plane function entity candidate entry further comprises at least said delay value, and
transmitting circuitry (32),
wherein the receiving circuitry (31) is further configured to receive, from a network function entity, a query for said user plane function entity candidate list, and
wherein the transmitting circuitry (32) is configured to transmit, towards said network function entity, said user plane function entity candidate list.

7. The apparatus (30) according to claim 6, wherein said configured server entity is a network address translation server entity.

8. The apparatus (30) according to claim 6 or 7, wherein
said private internet protocol address is a private internet protocol address of said user plane function over a Data Network, and
said public internet protocol address is a public internet protocol address of said user plane function over a Data Network derived from the private N6 internet protocol address by network address translation.

9. A system comprising a network repository function entity according to any of claims 6 to 8 and a user plane function entity, the user plane function entity (70) comprising:
second receiving circuitry (71) configured to receive, from a network function entity, an instruction to inquire own network address translation related information and to report a private internet protocol address of said user plane function entity (70) and a public internet protocol address of said user plane function entity (70) to a network repository function entity,
inquiring circuitry (72) configured to inquire said own network address translation related information, and
second transmitting circuitry (73) configured to transmit, towards said network repository function entity, said private internet protocol address and said public internet protocol address.

10. The system according to claim 9, wherein
said private internet protocol address is a private N6 internet protocol address of said user plane function over a Data Network, and
said public internet protocol address is a public N6 internet protocol address of said user plane function over a Data Network derived from the private N6 internet protocol address by network address translation.

11. The system according to claim 9 or 10, wherein said configured server entity is a network address translation server entity.

12. A method performed by a session management function entity, said method comprising:
transmitting, towards a network repository function entity (30), a query for a user plane function entity candidate list,
receiving (S81), from said network repository function entity (30), said user plane function entity candidate list including a plurality of user plane function entity candidate entries, wherein each respective user plane function entity candidate entry of said candidate list comprises at least information on a private internet protocol address of the respective user plane function entity candidate and information on a public internet protocol address of said respective user plane function entity candidate, and wherein said each respective user plane function entity candidate entry further comprises at least a delay value indicative of a delay on an N6 interface between said respective user plane function entity candidate and a configured server entity, and
selecting (S82), based on said respective delay, at least one user plane function entity from said user plane function entity candidate list.

13. A method performed by a network repository function entity, said method comprising:
receiving, from a plurality of user plane function entities, respective user plane function entity related information including at least a private internet protocol address of said respective user plane function entity, a public internet protocol address of said respective user plane function entity, and a delay value indicative of a delay on an N6 interface between said respective user plane function entity and a configured server entity,
generating a user plane function entity candidate list based on said user plane function entity related information, wherein said user plane function entity candidate list includes a plurality of user plane function entity candidate entries, wherein each respective user plane function entity candidate entry of said user plane function entity candidate list comprises at least information on said private internet protocol address of said respective user plane function entity candidate and information on said public internet protocol address of said respective user plane function entity candidate, wherein said each respective user plane function entity candidate entry further comprises at least said delay value,
receiving (S91), from a network function entity, a query for said user plane function entity candidate list, and
transmitting (S92), towards said network function entity, said user plane function entity candidate list.

14. The method according to claim 13, further comprising the following steps performed by a user plane function entity:
receiving (S111), from a network function entity, an instruction to inquire own network address translation related information and to report a private internet protocol address of said user plane function entity (70) and a public internet protocol address of said user plane function entity (70) to a network repository function entity,
inquiring (S112) said own network address translation related information, and
transmitting (S113), towards said network repository function entity, said private internet protocol address and said public internet protocol address.

15. A computer program product comprising computer-executable computer program code which, when the program is run on a computer, is configured to cause the computer to carry out the method according to any one of claims 12 to 14, wherein optionally the computer program product comprises a computer-readable medium on which the computer-executable computer program code is stored, and/or wherein the program is directly loadable into an internal memory of the computer or a processor thereof.

## Patentansprüche

1. Einrichtung (10), wobei die Einrichtung eine Sitzungsverwaltungsfunktionsentität ist und Folgendes umfasst:
eine Übertragungsschaltung (21), die dazu ausgelegt ist, eine Abfrage einer Benutzerebenenfunktionsentitätskandidatenliste zu einer Netzwerkrepositoriumsfunktionsentität (30) zu übertragen,
eine Empfangsschaltung (11), die dazu ausgelegt ist, die Benutzerebenenfunktionsentitätskandidatenliste, die eine Vielzahl von Benutzerebenenfunktionsentitätskandidateneinträgen umfasst, von der Netzwerkrepositoriumsfunktionsentität (30) zu empfangen, wobei jeder jeweilige Benutzerebenenfunktionsentitätskandidateneintrag der Kandidatenliste mindestens Informationen über eine private Internetprotokolladresse des jeweiligen Benutzerebenenfunktionsentitätskandidaten und Informationen über eine öffentliche Internetprotokolladresse des jeweiligen Benutzerebenenfunktionsentitätskandidaten umfasst, und wobei jeder jeweilige Benutzerebenenfunktionsentitätskandidateneintrag ferner mindestens einen Verzögerungswert umfasst, der eine Verzögerung an einer N6-Schnittstelle zwischen dem jeweiligen Benutzerebenenfunktionsentitätskandidaten und einer ausgelegten Serverentität anzeigt, und
eine Auswahlschaltung (12), die dazu ausgelegt ist, mindestens eine Benutzerebenenfunktionsentität aus der Benutzerebenenfunktionsentitätskandidatenliste auszuwählen, wobei die Auswahlschaltung (12) dazu ausgelegt ist, auf Basis der jeweiligen Verzögerung auszuwählen.

2. Einrichtung (10) nach Anspruch 1, die ferner Folgendes umfasst
eine Übertragungsschaltung (21), die dazu ausgelegt ist, Informationen über die Benutzerebenenfunktionsentität zu einer Edgeanwendungsserverentdeckungsfunktionsentität (50) zu übertragen, wobei die Informationen über die Benutzerebenenfunktionsentität mindestens die private Internetprotokolladresse der Benutzerebenenfunktionsentität und die öffentliche Internetprotokolladresse der Benutzerebenenfunktionsentität beinhalten.

3. Einrichtung (10) nach Anspruch 1 oder 2, wobei die ausgelegte Serverentität eine Netzwerkadressübersetzungsserverentität ist.

4. Einrichtung (10) nach einem der Ansprüche 1 bis 3, die ferner Folgendes umfasst
eine Übertragungsschaltung (21), die dazu ausgelegt ist, eine Anweisung für die mindestens eine Benutzerebenenfunktionsentität zum Abfragen von auf eine eigene Netzwerkadressübersetzung bezogenen Informationen zu mindestens einer Benutzerebenenfunktionsentität (70) zu übertragen und die auf eine eigene Netzwerkadressübersetzung bezogenen Informationen der Netzwerkrepositoriumsfunktionsentität (30) zu melden, wobei die auf eine eigene Netzwerkadressübersetzung bezogenen Informationen eine private Internetprotokolladresse der Benutzerebenenfunktionsentität, eine öffentliche Internetprotokolladresse der Benutzerebenenfunktionsentität und einen Verzögerungswert, der eine Verzögerung an einer N6-Schnittstelle zwischen der Benutzerebenenfunktionsentität und einer ausgelegten Serverentität anzeigt, beinhalten.

5. Einrichtung (10) nach einem der Ansprüche 1 bis 4, wobei
die private Internetprotokolladresse eine private Internetprotokolladresse der Benutzerebenenfunktion über ein Datennetzwerk ist, und
die öffentliche Internetprotokolladresse eine öffentliche Internetprotokolladresse der Benutzerebenenfunktion über ein Datennetzwerk ist, das durch eine Netzwerkadressübersetzung der privaten N6-Internetprotokolladresse abgeleitet ist.

6. Einrichtung (30), wobei die Einrichtung eine Netzwerkrepositoriumsfunktionsentität ist und Folgendes umfasst:
eine Empfangsschaltung (31), die dazu ausgelegt ist, jeweilige auf eine Benutzerebenenfunktionsentität bezogene Informationen, die mindestens eine private Internetprotokolladresse der jeweiligen Benutzerebenenfunktionsentität, eine öffentliche Internetprotokolladresse der jeweiligen Benutzerebenenfunktionsentität und einen Verzögerungswert, der eine Verzögerung an einer N6-Schnittstelle zwischen der jeweiligen Benutzerebenenfunktionsentität und einer ausgelegten Serverentität anzeigt, beinhalten, von einer Vielzahl von Benutzerebenenfunktionsentitäten zu empfangen,
eine Erzeugungsschaltung, die dazu ausgelegt ist, auf Basis der auf eine Benutzerebenenfunktionsentität bezogenen Informationen eine Benutzerebenenfunktionsentitätskandidatenliste zu erzeugen, wobei die Benutzerebenenfunktionsentitätskandidatenliste eine Vielzahl von Benutzerebenenfunktionsentitätskandidateneinträgen beinhaltet, wobei jeder jeweilige Benutzerebenenfunktionsentitätskandidateneintrag der Benutzerebenenfunktionsentitätskandidatenliste mindestens Informationen über die private Internetprotokolladresse des jeweiligen Benutzerebenenfunktionsentitätskandidaten und Informationen über die öffentliche Internetprotokolladresse des jeweiligen Benutzerebenenfunktionsentitätskandidaten umfasst, wobei jeder jeweilige Benutzerebenenfunktionsentitätskandidateneintrag ferner mindestens den Verzögerungswert umfasst, und
eine Übertragungsschaltung (32),
wobei die Empfangsschaltung (31) ferner dazu ausgelegt ist, eine Abfrage der Benutzerebenenfunktionsentitätskandidatenliste von einer Netzwerkfunktionsentität zu empfangen, und
wobei die Übertragungsschaltung (32) dazu ausgelegt ist, die Benutzerebenenfunktionsentitätskandidatenliste zur Netzwerkfunktionsentität zu übertragen.

7. Einrichtung (30) nach Anspruch 6, wobei die ausgelegte Serverentität eine Netzwerkadressübersetzungsserverentität ist.

8. Einrichtung (30) nach Anspruch 6 oder 7, wobei
die private Internetprotokolladresse eine private Internetprotokolladresse der Benutzerebenenfunktion über ein Datennetzwerk ist, und
die öffentliche Internetprotokolladresse eine öffentliche Internetprotokolladresse der Benutzerebenenfunktion über ein Datennetzwerk ist, das durch eine Netzwerkadressübersetzung der privaten N6-Internetprotokolladresse abgeleitet ist.

9. System, das eine Netzwerkrepositoriumsfunktionsentität nach einem der Ansprüche 6 bis 8 und eine Benutzerebenenfunktionsentität umfasst, wobei die Benutzerebenenfunktionsentität (70) Folgendes umfasst:
eine zweite Empfangsschaltung (71), die dazu ausgelegt ist, eine Anweisung zum Abfragen von auf einer eigenen Netzwerkadressübersetzung bezogenen Informationen von einer Netzwerkfunktionsentität zu empfangen und eine private Internetprotokolladresse der Benutzerebenenfunktionsentität (70) und eine öffentliche Internetprotokolladresse der Benutzerebenenfunktionsentität (70) einer Netzwerkrepositoriumsfunktionsentität zu melden,
eine Abfrageschaltung (72), die dazu ausgelegt ist, die auf die eigene Netzwerkadressübersetzung bezogenen Informationen abzufragen, und
eine zweite Übertragungsschaltung (73), die dazu ausgelegt ist, die private Internetprotokolladresse und die öffentliche Internetprotokolladresse zur Netzwerkrepositoriumsfunktionsentität zu übertragen.

10. System nach Anspruch 9, wobei
die private Internetprotokolladresse eine private N6-Internetprotokolladresse der Benutzerebenenfunktion über ein Datennetzwerk ist, und
die öffentliche Internetprotokolladresse eine öffentliche N6-Internetprotokolladresse der Benutzerebenenfunktion über ein Datennetzwerk ist, das durch eine Netzwerkadressübersetzung der privaten N6-Internetprotokolladresse abgeleitet ist.

11. System nach Anspruch 9 oder 10, wobei die ausgelegte Serverentität eine Netzwerkadressübersetzungsserverentität ist.

12. Verfahren, das von einer Sitzungsverwaltungsfunktionsentität durchgeführt wird, wobei das Verfahren Folgendes umfasst:
Übertragen einer Abfrage einer Benutzerebenenfunktionsentitätskandidatenliste zu einer Netzwerkrepositoriumsfunktionsentität (30),
Empfangen (S81) der Benutzerebenenfunktionsentitätskandidatenliste, die eine Vielzahl von Benutzerebenenfunktionsentitätskandidateneinträgen umfasst, von der Netzwerkrepositoriumsfunktionsentität (30), wobei jeder jeweilige Benutzerebenenfunktionsentitätskandidateneintrag der Kandidatenliste mindestens Informationen über eine private Internetprotokolladresse des jeweiligen Benutzerebenenfunktionsentitätskandidaten und Informationen über eine öffentliche Internetprotokolladresse des jeweiligen Benutzerebenenfunktionsentitätskandidaten umfasst, und wobei jeder jeweilige Benutzerebenenfunktionsentitätskandidateneintrag ferner mindestens einen Verzögerungswert umfasst, der eine Verzögerung an einer N6-Schnittstelle zwischen dem jeweiligen Benutzerebenenfunktionsentitätskandidaten und einer ausgelegten Serverentität anzeigt, und
Auswählen (S82) von mindestens einer Benutzerebenenfunktionsentität auf Basis der jeweiligen Verzögerung aus der Benutzerebenenfunktionsentitätskandidatenliste.

13. Verfahren, das von einer Netzwerkrepositoriumsfunktionsentität durchgeführt wird, wobei das Verfahren Folgendes umfasst:
Empfangen von jeweiligen auf eine Benutzerebenenfunktionsentität bezogenen Informationen, die mindestens eine private Internetprotokolladresse der jeweiligen Benutzerebenenfunktionsentität, eine öffentliche Internetprotokolladresse der jeweiligen Benutzerebenenfunktionsentität und einen Verzögerungswert, der eine Verzögerung an einer N6-Schnittstelle zwischen der jeweiligen Benutzerebenenfunktionsentität und einer ausgelegten Serverentität anzeigt, beinhalten, von einer Vielzahl von Benutzerebenenfunktionsentitäten,
Erzeugen einer Benutzerebenenfunktionsentitätskandidatenliste auf Basis der auf eine Benutzerebenenfunktionsentität bezogenen Informationen, wobei die Benutzerebenenfunktionsentitätskandidatenliste eine Vielzahl von Benutzerebenenfunktionsentitätskandidateneinträgen beinhaltet, wobei jeder jeweilige Benutzerebenenfunktionsentitätskandidateneintrag der Benutzerebenenfunktionsentitätskandidatenliste mindestens Informationen über die private Internetprotokolladresse des jeweiligen Benutzerebenenfunktionsentitätskandidaten und Informationen über die öffentliche Internetprotokolladresse des jeweiligen Benutzerebenenfunktionsentitätskandidaten umfasst, wobei jeder jeweilige Benutzerebenenfunktionsentitätskandidateneintrag ferner mindestens den Verzögerungswert umfasst,
Empfangen (S91) einer Abfrage einer Benutzerebenenfunktionsentitätskandidatenliste von einer Netzwerkfunktionsentität, und
Übertragen (S92) der Benutzerebenenfunktionsentitätskandidatenliste zur Netzwerkfunktionsentität.

14. Verfahren nach Anspruch 13, das ferner die folgenden Schritte umfasst, die von einer Benutzerebenenfunktionsentität durchgeführt werden:
Empfangen (S111) einer Anweisung zum Abfragen von auf einer eigenen Netzwerkadressübersetzung bezogenen Informationen von einer Netzwerkfunktionsentität und Melden einer privaten Internetprotokolladresse der Benutzerebenenfunktionsentität (70) und einer öffentlichen Internetprotokolladresse der Benutzerebenenfunktionsentität (70) bei einer Netzwerkrepositoriumsfunktionsentität,
Abfragen (S112) der auf die eigene Netzwerkadressübersetzung bezogenen Informationen, und
Übertragen (S113) der privaten Internetprotokolladresse und der öffentlichen Internetprotokolladresse zur Netzwerkrepositoriumsfunktionsentität.

15. Computerprogrammprodukt, das einen computerausführbaren Computerprogrammcode umfasst, der, wenn das Programm auf einem Computer läuft, dazu ausgelegt ist, den Computer zu veranlassen, das Verfahren nach einem der Ansprüche 12 bis 14 umzusetzen, wahlweise wobei das Computerprogrammprodukt ein computerlesbares Medium umfasst, auf dem der computerlesbare Computerprogrammcode gespeichert ist, und/oder wobei das Programm direkt in einen internen Speicher des Computers oder eines Prozessors davon ladbar ist.

## Revendications

1. Appareil (10), ledit appareil étant une entité de fonction de gestion de session et comprenant :
une circuiterie de transmission (21) configurée pour transmettre vers une entité de fonction de référentiel de réseau (30) une requête pour une liste de candidats d'entités de fonction de plan utilisateur,
une circuiterie de réception (11) configurée pour recevoir de ladite entité de fonction de référentiel de réseau (30) ladite liste de candidats d'entités de fonction de plan utilisateur comportant une pluralité d'entrées de candidat d'entité de fonction de plan utilisateur, dans lequel chaque entrée de candidat d'entité de fonction de plan utilisateur respective de ladite liste de candidats comprend au moins des informations sur une adresse IP privée du candidat d'entité de fonction de plan utilisateur respectif et des informations sur une adresse IP publique dudit candidat d'entité de fonction de plan utilisateur respectif, et dans lequel chacune desdites entrées de candidat d'entité de fonction de plan utilisateur respective comprend en outre au moins une valeur de retard indicative d'un retard sur une interface N6 entre ledit candidat d'entité de fonction de plan utilisateur respectif et une entité de serveur configurée, et
une circuiterie de sélection (12) configurée pour sélectionner au moins une entité de fonction de plan utilisateur à partir de ladite liste de candidats d'entités de fonction de plan utilisateur, dans lequel ladite circuiterie de sélection (12) est configurée pour faire les sélections sur la base dudit retard respectif.

2. Appareil (10) selon la revendication 1, comprenant en outre
une circuiterie de transmission (21) configurée pour transmettre vers une entité de fonction de découverte de serveur d'application périphérique (50) des informations sur ladite entité de fonction de plan utilisateur, dans lequel lesdites informations sur ladite entité de fonction de plan utilisateur comportent au moins ladite adresse IP privée de ladite entité de fonction de plan utilisateur et ladite adresse IP publique de ladite entité de fonction de plan utilisateur.

3. Appareil (10) selon la revendication 1 ou 2, dans lequel ladite entité de serveur configurée est une entité de serveur de traduction d'adresses réseau.

4. Appareil (10) selon l'une des revendications 1 à 3, comprenant en outre une circuiterie de transmission (21) configurée pour transmettre vers au moins une entité de fonction de plan utilisateur (70) une instruction destinée à ladite au moins entité de fonction de plan utilisateur pour demander des informations relatives à la traduction d'adresses réseau propre et pour rapporter lesdites informations relatives à la traduction d'adresses réseau propre à ladite entité de fonction de référentiel de réseau (30), dans lequel lesdites informations relatives à la traduction d'adresses réseau propre comportent une adresse IP privée de ladite entité de fonction de plan utilisateur, une adresse IP publique de ladite entité de fonction de plan utilisateur, et une valeur de retard indicative d'un retard sur une interface N6 entre ladite entité de fonction de plan utilisateur et une entité de serveur configurée.

5. Appareil (10) selon l'une des revendications 1 à 4, dans lequel
ladite adresse IP privée est une adresse IP privée de ladite fonction de plan utilisateur sur un réseau de données, et
ladite adresse IP publique est une adresse IP publique de ladite fonction de plan utilisateur sur un réseau de données, dérivée de l'adresse IP privée N6 par traduction d'adresses réseau.

6. Appareil (30), ledit appareil étant une entité de fonction de référentiel de réseau et comprenant :
une circuiterie de réception (31) configurée pour recevoir d'une pluralité d'entités de fonction de plan utilisateur des informations relatives à l'entité de fonction de plan utilisateur respectives comportant au moins une adresse IP privée de ladite entité de fonction de plan utilisateur respective, une adresse IP publique de ladite entité de fonction de plan utilisateur respective et une valeur de retard indicative d'un retard sur une interface N6 entre ladite entité de fonction de plan utilisateur respective et une entité de serveur configurée,
une circuiterie de génération configurée pour générer une liste de candidats d'entités de fonction de plan utilisateur sur la base desdites informations relatives à l'entité de fonction de plan utilisateur, dans lequel ladite liste de candidats d'entités de fonction de plan utilisateur comporte une pluralité d'entrées de candidat d'entité de fonction de plan utilisateur, dans lequel chaque entrée de candidat d'entité de fonction de plan utilisateur respective de ladite liste de candidats d'entités de fonction de plan utilisateur comprend au moins des informations sur ladite adresse IP privée dudit candidat d'entité de fonction de plan utilisateur respectif et des informations sur ladite adresse IP publique dudit candidat d'entité de fonction de plan utilisateur respectif, dans lequel chacune desdites entrées de candidat d'entité de fonction de plan utilisateur respective comprend en outre au moins ladite valeur de retard, et
une circuiterie de transmission (32),
dans lequel la circuiterie de réception (31) est en outre configurée pour recevoir d'une entité de fonction de réseau une requête pour ladite liste de candidats d'entités de fonction de plan utilisateur, et
dans lequel la circuiterie de transmission (32) est configurée pour transmettre vers ladite entité de fonction de réseau ladite liste de candidats d'entités de fonction de plan utilisateur.

7. Appareil (30) selon la revendication 6, dans lequel ladite entité de serveur configurée est une entité de serveur de traduction d'adresses réseau.

8. Appareil (30) selon la revendication 6 ou 7, dans lequel
ladite adresse IP privée est une adresse IP privée de ladite fonction de plan utilisateur sur un réseau de données, et
ladite adresse IP publique est une adresse IP publique de ladite fonction de plan utilisateur sur un réseau de données, dérivée de l'adresse IP privée N6 par traduction d'adresses réseau.

9. Système comprenant une entité de fonction de référentiel de réseau selon l'une des revendications 6 à 8 et une entité de fonction de plan utilisateur, l'entité de fonction de plan utilisateur (70) comprenant :
une deuxième circuiterie de réception (71) configurée pour recevoir d'une entité de fonction de réseau une instruction pour demander des informations relatives à la traduction d'adresses réseau propre et pour rapporter une adresse IP privée de ladite entité de fonction de plan utilisateur (70) et une adresse IP publique de ladite entité de fonction de plan utilisateur (70) à une entité de fonction de référentiel de réseau,
une circuiterie de requête (72) configurée pour demander lesdites informations relatives à la traduction d'adresses réseau propre, et
une deuxième circuiterie de transmission (73) configurée pour transmettre vers ladite entité de fonction de référentiel de réseau ladite adresse IP privée et ladite adresse IP publique.

10. Système selon la revendication 9, dans lequel
ladite adresse IP privée est une adresse IP privée N6 de ladite fonction de plan utilisateur sur un réseau de données, et
ladite adresse IP publique est une adresse IP publique N6 de ladite fonction de plan utilisateur sur un réseau de données, dérivée de l'adresse IP privée N6 par traduction d'adresses réseau.

11. Système selon la revendication 9 ou 10, dans lequel ladite entité de serveur configurée est une entité de serveur de traduction d'adresses réseau.

12. Procédé réalisé par une entité de fonction de gestion de session, ledit procédé comprenant les étapes suivantes :
transmettre vers une entité de fonction de référentiel de réseau (30) une requête pour une liste de candidats d'entités de fonction de plan utilisateur,
recevoir (S81) de ladite entité de fonction de référentiel de réseau (30) ladite liste de candidats d'entités de fonction de plan utilisateur comportant une pluralité d'entrées de candidat d'entité de fonction de plan utilisateur, dans lequel chaque entrée de candidat d'entité de fonction de plan utilisateur respective de ladite liste de candidats comprend au moins des informations sur une adresse IP privée du candidat d'entité de fonction de plan utilisateur respectif et des informations sur une adresse IP publique dudit candidat d'entité de fonction de plan utilisateur respectif, et dans lequel chacune desdites entrées de candidat d'entité de fonction de plan utilisateur respective comprend en outre au moins une valeur de retard indicative d'un retard sur une interface N6 entre ledit candidat d'entité de fonction de plan utilisateur respectif et une entité de serveur configurée, et
sélectionner (S82), sur la base dudit retard respectif, au moins une entité de fonction de plan utilisateur de ladite liste de candidats d'entités de fonction de plan utilisateur.

13. Procédé réalisé par une entité de fonction de référentiel de réseau, ledit procédé comprenant les étapes suivantes :
recevoir d'une pluralité d'entités de fonction de plan utilisateur des informations relatives à l'entité de fonction de plan utilisateur respectives comportant au moins une adresse IP privée de ladite entité de fonction de plan utilisateur respective, une adresse IP publique de ladite entité de fonction de plan utilisateur respective et une valeur de retard indicative d'un retard sur une interface N6 entre ladite entité de fonction de plan utilisateur respective et une entité de serveur configurée,
générer une liste de candidats d'entités de fonction de plan utilisateur sur la base desdites informations relatives à l'entité de fonction de plan utilisateur, dans lequel ladite liste de candidats d'entités de fonction de plan utilisateur comporte une pluralité d'entrées de candidat d'entité de fonction de plan utilisateur, dans lequel chaque entrée de candidat d'entité de fonction de plan utilisateur respective de ladite liste de candidats d'entités de fonction de plan utilisateur comprend au moins des informations sur ladite adresse IP privée dudit candidat d'entité de fonction de plan utilisateur respectif et des informations sur ladite adresse IP publique dudit candidat d'entité de fonction de plan utilisateur respectif, dans lequel chacune desdites entrées de candidat d'entité de fonction de plan utilisateur respective comprend en outre au moins ladite valeur de retard,
recevoir (S91) d'une entité de fonction de réseau une requête pour ladite liste de candidats d'entités de fonction de plan utilisateur, et
transmettre (S92) vers ladite entité de fonction de réseau ladite liste de candidats d'entités de fonction de plan utilisateur.

14. Procédé selon la revendication 13, comprenant en outre les étapes suivantes effectuées par une entité de fonction de plan utilisateur :
recevoir (S111) d'une entité de fonction de réseau une instruction pour demander des informations relatives à la traduction d'adresses réseau propre et pour rapporter une adresse IP privée de ladite entité de fonction de plan utilisateur (70) et une adresse IP publique de ladite entité de fonction de plan utilisateur (70) à une entité de fonction de référentiel de réseau,
demander (S112) lesdites informations relatives à la traduction d'adresses réseau propre, et
transmettre (S113) vers ladite entité de fonction de référentiel de réseau ladite adresse IP privée et ladite adresse IP publique.

15. Produit de programme informatique comprenant un code de programme informatique exécutable qui, lorsque le programme est exécuté sur un ordinateur, est configuré pour amener l'ordinateur à mettre en œuvre le procédé selon l'une des revendications 12 à 14, dans lequel facultativement, le produit de programme informatique comprend un support lisible par ordinateur sur lequel est stocké le code de programme informatique exécutable, et/ou dans lequel le programme est directement chargeable dans une mémoire interne de l'ordinateur ou d'un processeur de celui-ci.
